# EUROPEAN PATENT SPECIFICATION

(11) **EP 4 406 037 B1**
(45) Date of publication and mention of the grant of the patent: **06.05.2026**
(21) Application number: 22782753.2
(22) Date of filing: 21.09.2022
(51) Int. Cl.: H01M 8/0258, H01M 8/12

(54) **ELECTROCHEMICAL CELL UNIT WITH IMPROVED SEPARATOR PLATE**
ELEKTROCHEMISCHE ZELLE MIT VERBESSERTER SEPARATORPLATTE
UNITÉ DE CELLULE ÉLECTROCHIMIQUE À PLAQUE SÉPARATRICE AMÉLIORÉE

(30) Priority: 23.09.2021 GB 202113592
(43) Date of publication of application: 31.07.2024
(73) Proprietor: Ceres Intellectual Property Company Limited, West Sussex RH13 5PX (GB)
(72) Inventor: NOBBS, Christopher James, Horsham West Sussex RH13 5PX (GB); GAWEL, Duncan Albert Wojciech, Horsham West Sussex RH13 5PX (GB); HERCZ, Zoltan, Horsham West Sussex RH13 5PX (GB)
(74) Representative: Holt, Lucy Rose
(86) International application number: PCT/GB2022/052386
(87) International publication number: WO 2023/047101

(56) References cited:
- WO-A1-2020/126486
- US-A1- 2019 221 866
- US-A1- 2019 319 279

## Description

### Field of the Invention

The present invention relates to electrochemical cell units, in particular, fuel cell units and electrolyser cell units, stacks containing such cell units, methods for manufacturing a separator plate for use in such cell units, separator plates so formed, and the use of such cell units. The cell units of the present invention include cells of solid oxide, polymer electrolyte membrane, and molten carbonate types. The present invention more specifically relates to solid oxide fuel cell (SOFC) and solid oxide electrolyser cell (SOEC) units, and these may include metal-supported solid oxide fuel cell (MS-SOFC) or electrolyser cell (MS-SOEC) units.

### Background to the Invention

Some fuel cell units can produce electricity by using an electrochemical conversion process that oxidises fuel to produce electricity. Some fuel cell units can also, or instead, operate as regenerative fuel cells (or reverse fuel cells) units, often known as electrolyser fuel cell units, for example to separate hydrogen and oxygen from water, or carbon monoxide and oxygen from carbon dioxide. They may be tubular or planar in configuration. Planar fuel cell units may be arranged overlying one another in a stack arrangement, for example 100-200 fuel cell units in a stack, with the individual fuel cell units arranged, for example, electrically in series.

A solid oxide fuel cell (SOFC) unit that produces electricity is based upon a solid oxide electrolyte that conducts negative oxygen ions from a cathode to an anode located on opposite sides of the electrolyte. For this, a fuel, or reformed fuel, contacts the anode (fuel electrode) and an oxidant, such as air or an oxygen rich fluid, contacts the cathode (air electrode). Conventional ceramic-supported (e.g. anode-supported) SOFCs have low mechanical strength and are vulnerable to fracture. Hence, metal-supported SOFCs have been developed which have the active fuel cell component layer supported on a metal substrate. In these cells, the ceramic layers can be very thin since they only perform an electrochemical function: that is to say, the ceramic layers are not self-supporting but rather are thin coatings/films laid down on and supported by the metal substrate. Such metal supported SOFC stacks are more robust, lower cost, have better thermal properties than ceramic-supported SOFCs and can be manufactured using conventional metal welding techniques.

A solid oxide electrolyser cell (SOEC) may have the same structure as an SOFC but is essentially that SOFC operating in reverse, or in a regenerative mode, to achieve the electrolysis of water and/or carbon dioxide by input of electrical energy and using the solid oxide electrolyte to produce hydrogen gas and/or carbon monoxide and oxygen.

The present invention is directed at an electrochemical cell unit and concerns the design of their separator plates. It is thus applicable to various types of fuel and electrolyser cells, for example, based on solid oxide electrolytes, polymer electrolyte membranes, or molten electrolytes. For convenience, "cell units" is used to refer to "electrochemical cell units" including fuel or electrolyser cell units.

Each cell unit in a stack of cell units typically includes a cell layer comprising an electrochemically active cell region (such as a metal-supported electrochemically active cell region) and a separator plate. A separator plate typically contacts one side of the cell layer of its cell unit and, in a stack of cell units, may also contact an opposite side of a cell layer of an adjacent cell unit.

Fig. 1 is drawn from WO 2020/126486 A1. Fig. 1 shows an exploded view of a fuel cell unit 10, and two gaskets 34. The fuel cell unit 10 comprises a flat metal support plate 14 stacked next to a separator plate 12. The separator plate 12 is shown to have flanged perimeter features 18 around its perimeter. The flanged perimeter features 18 extend out of the predominant plane of the sheet, as found at a central fluid volume area, to form the fluid volume 20 within this fuel cell unit upon assembly of the fuel cell unit. In a middle portion of the fuel cell unit 10, an electrochemically active cell region 50 (i.e. comprising the electrochemically active layers) is provided on the metal support plate, located outside of the fluid volume 20. The metal support plate 14 is provided with multiple small holes (not shown) to enable fluid in the fluid volume 20 to be in contact with the side of the electrochemical layer that is closest to the metal support plate 14. The anode (fuel electrode) layer may be located adjacent the small holes with the fluid volume 20 within the fuel cell unit comprising a fuel flow volume 20 supplied by fuel entering and exiting via the fluid ports 22, which are thus fuel ports 22. The cathode (air electrode) layer may be on the opposite side of the electrochemically active cell region 50, i.e. on its outer face, and is exposed to air flowing across that layer during use of the fuel cell unit 10. Both the separator plate 12 and the metal support plate 14 are provided with fluid ports 22. Around the fluid ports of the separator plate 12, round dimples 24 are provided extending out of the plane of the base of the fluid volume 20 a distance corresponding to that of the height of the flanged perimeter features 18. This is so that they will contact the opposing surface of the metal support plate 14, just like the flanged perimeter features 18, when the cell unit 10 is assembled. Central projections 32 and central downward projections 30 create electrical contact between cell units and also provide a support function for the fuel cell unit in the central region, extending upwardly to the underside of the metal support plate 14 at the area of the small holes, and downwardly to the opposing surface of the electrochemically active layer of a cell below it. A mid-plane is formed by the separator plate 12 between the central projections 32 and central downward projections 30, which is the same height across the (opposing) area of the electrochemically active cell region 50.

In the arrangement of WO 2020/126486 A1, the dimples allow fluid in fluid volume 20 to mix throughout the fluid volume 20. However, they do not control the distribution of fluid in the fluid volume 20 and so the distribution of fluid in the fluid volume 20 may not be optimal.

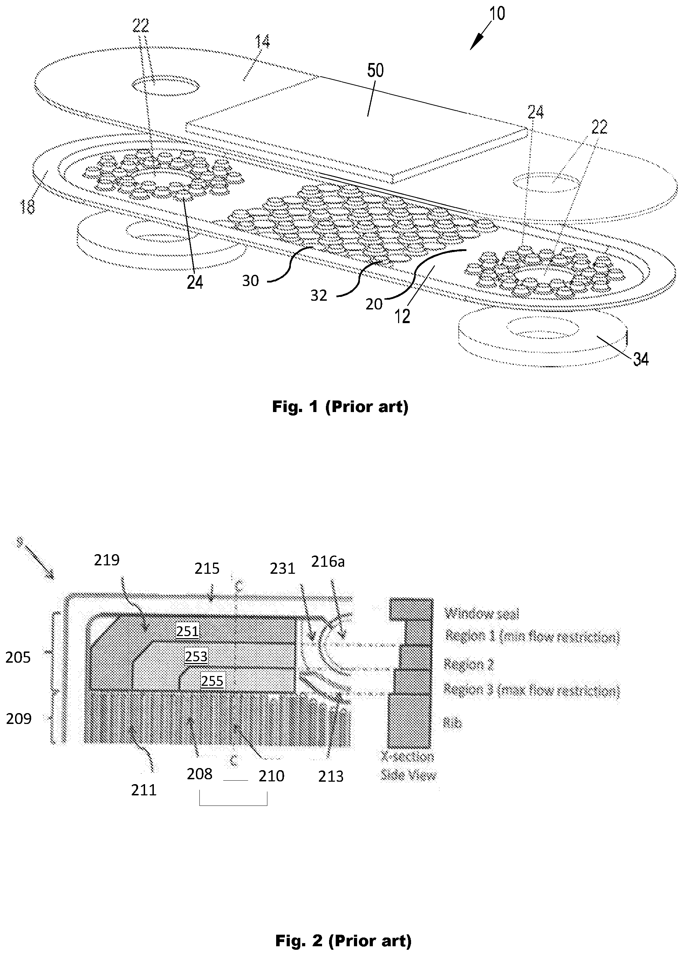

Fig. 2 is drawn from US2014/065508 A1. Fig. 2 (left) is a diagram showing a portion of an interconnect (or separator) 9 in plan view, and Fig. 2 (right) schematically illustrates a cross-section of the interconnect 9 viewed along line C-C 210. A peripheral seal 215 seal an anode-side of the interconnect 9 and an adjacent fuel cell to prevent air from reaching the anode electrode of the fuel cell. A fuel distribution flow field 219 includes regions 1 (251), 2 (253), and 3 (255) of varying depth in region 205 to provide varying degrees of flow restriction to the fuel entering through a port 216a. A flow field 211 in region 209 is provided with channels 208. The first region 251 has the greatest depth and directs fuel from port 216a across area 231 to channels 208 on the periphery of a flow field 211. The second region 253 has an intermediate depth and directs fuel from port 216a across area 231 to channels 208 between the periphery and middle portions of the flow field 211. A third region 255 has the shallowest depth and directs fuel from the port 216a across area 231 to channels 208 in the middle portion of the flow field 211. A rib 213 is concentric with the port 216a. The variation in depth between the different regions 251, 253, and 255 is formed by powder metallurgy. The variation in depth between the different regions 251, 253, and 255 may result in a varying degree of flow restriction between the regions. Electrochemically active layers of a cell unit are provided within the plan view area of the flow field 211. Each of the channels 208 has an identical height.

In the arrangement of US2014/065508 A1, the channels confine (and segregate) fuel therein, and thereby prevent flow across the separator perpendicular to the channels. Fluid in separate channels cannot mix. The manifold is required to distribute fuel to the various channels, and then the channels are in turn required to duct fuel across the area of the cell unit covered by the electrochemically active layers. Therefore, the channels can distribute the fuel over the area of the cell unit covered by the electrochemically active layers. The variation in depth between the different regions 251, 253, and 255 of the manifold is formed by powder metallurgy, which is an expensive technique. Individual channels may become blocked, thereby starving the electrochemically active areas supplied by those channels of fuel. This may cause damage to the electrochemically active areas, and may cause failure of the cell unit. The contact area of the channels contacts the electrochemically active layers, this contact area reduces the area of the outermost layer of the electrochemically active layers which is in fluidic communication with the fuel volume. As a result, it is likely that electrical power generated in these areas is reduced, and power density of the cell unit is correspondingly reduced.

US2019319279A1 relates generally to a separator plate for an electrochemical system, to a bipolar plate for an electrochemical system comprising such a separator plate, and to an electrochemical system comprising a plurality of such separator plates or bipolar plates. In particular, the electrochemical system can be a fuel cell system, an electrochemical compressor, an electrolyzer or a redox flow battery.

US2019221866A1 relates generally to an electrochemical cell stack having a plurality of electrochemical cells stacked along a longitudinal axis. The electrochemical cells include a membrane electrode assembly comprising a cathode catalyst layer, an anode catalyst layer, and a polymer membrane interposed between the cathode catalyst layer and the anode catalyst layer. The electrochemical cells also include an anode plate and a cathode plate with the membrane electrode assembly interposed therebetween, and the anode plate defines a plurality of channels that form an anode flow field facing the anode catalyst layer. The electrochemical cells further include a cathode flow field positioned between the cathode plate and the cathode catalyst layer, wherein the cathode flow field comprises a porous structure.

The present invention seeks to address, overcome or mitigate at least one of the prior art disadvantages.

### SUMMARY OF THE INVENTION

In a first aspect there is provided an electrochemical cell unit comprising:
a cell layer comprising an electrochemically active cell region; and,
a separator plate comprising a metal sheet overlying the cell layer;
wherein the separator plate has a selectively shaped three dimensional (3D) region that overlies at least part of the electrochemically active cell region;
and in that three dimensional (3D) region:
   the metal sheet has been deformed into a first plurality of outwardly extending dimpled protrusions that define the height of a first fluid volume on a first side of the separator plate;
   additionally, the metal sheet has been deformed into a second plurality of outwardly extending dimpled protrusions that define the height of a second fluid volume on a second side of the separator plate;
   whereby a mid-plane region is disposed between the protrusions; and,
   the mid-plane region is so shaped as selectively to vary its height in at least one direction across the active cell region such that the interrelated respective heights of the first and second fluid volumes are correspondingly increased and decreased as a result.

The mid-plane region is typically a portion of the sheet between the dimpled protrusions. The variations in height may be a (continuously) curved plane, a straight (flat) inclined plane (e.g., which is inclined with respect to the cell layer), or may be stepped with flat (or curved) planes between steps.

In contrast to the prior art, where the mid-plane region between dimpled protrusions is at a constant height, the height of the mid-plane region can be selectively tailored/ altered in at least one direction across the active cell region. The heights of the first and/or second fluid volumes are thus correspondingly increased and/or decreased in consequence. Where the variation of the height of the mid-plane region results in a larger height for a portion of a fluid volume, a fluid flow rate in that portion is relatively higher than a fluid flow rate in a portion of a fluid volume having a smaller height (in other words, the larger height in that portion of the fluid volume increases flow rate of fluid in that portion of the fluid volume). As a result, the variation of the height of the mid-plane region may be used to direct fluid within the first and/or second fluid volumes. Because the mid-plane region overlies (and faces) the electrochemically active cell region, variations in the mid-plane can be used to direct fluid over the extent (i.e. more evenly distribute) of the electrochemically active cell region, thereby improving performance of the cell unit. This may be achieved without needing channels in the active cell region to direct the fluid (preferably the 3D region does not comprise any channels) and obviates the need for a fluid distribution region or manifold in each cell unit. As a result, the electrochemically active cell region can cover a greater proportion of the cell unit area, thereby improving power density (for fuel cell operation) or rate of hydrogen production (for electrolyser cell operation) of each cell unit.

Because the separator plate is formed by shaping (deforming) a metal sheet, a dimpled protrusion on a first side of the separator plate will manifest as a dimpled cavity on a second side of the separator plate, and likewise for any other features shaped therein. This linkage might be perceived in design terms as a disadvantage, in that a degree of freedom is lost. However, the shaping processes for forming metal sheets can be used economically to produce electrochemical cells on a large scale, whilst also using the linkage to tailor the respective balance between the first and second fluid volumes to achieve an improvement in technical performance having regard to the port arrangement, flow pathways and directions, and thermal profiles in the cell in question. For example in a SOFC, if a height of the mid-plane is such that a fuel volume height is smaller towards the centre of a cell unit, the oxidant volume is correspondingly higher towards the centre of the cell unit, thereby increasing the flow rate of oxidant in across the centre of the cell unit. The oxidant may be used to cool the cell unit, and the centre of the cell units is typically the hottest part of a cell unit. The relatively increased flow rate of oxidant across the centre beneficially cools the centre of the cell unit.

The dimpled protrusions on the first and second sides of the separator plate and the variations in the height of the mid-plane may be formed in a single step, so as to economically produce electrochemical cells on a large scale.

If the separator plate in the 3D region has any ribs and channels, these will inevitably physically separate and hence constrain flow which would mean that a tailored change in height would not be as beneficial. Hence, the 3D region preferably does not have any elongate rib/channel features on respective sides of the metal sheet; as a result, the "mid-plane regions" that extend between the protrusions may be fluidly interconnected (e.g. such that the dimpled protrusions do not constrain or block flow in the respective fluid volumes).

The electrochemically active cell region may be of any type (e.g., solid oxide, polymer electrolyte membrane, and so forth) in which the separator plate separates two different respective fluid flow volumes, for example a fuel volume and an oxidant volume, and the three dimensional (3D) region overlies at least part of the electrochemically active cell region.

In a preferred embodiment, the 3D region overlying the electrochemical active cell region comprises a 3D structure so configured that it does not segregate flow into separate fluid flow pathways at least across the upstream half (and preferably across all) of the electrochemical active cell region; for example, this may be achieved by the 3D structure not containing any channels that confine flow into separate fluid flow pathways across the upstream half (and preferably across all) of the electrochemical active cell region.

The dimpled protrusions (dimples) therefore may have a circular, square, cross, pentagonal, or hexagonal-shaped cross-section. They may also be oval or irregular polygon in cross-section, but ideally should have an aspect ratio that does not significantly restrict the flow direction in the fluid volume. The aspect ratio of the dimpled protrusions may be less than 10, preferably less than 5, more preferably less than 2. Alternatively or additionally, the length of any dimpled protrusion may be less than half of a characteristic lateral dimension (e.g. length, width, or diameter) of the electrochemically active cell region.

The use of dimpled protrusions provides a reduced restriction to mixing in the fluid volume as compared with channelled prior art separators. They also provide a reduced contact area of the separator plate against the cell layer. This reduced contact area means that there is reduced blocking of access to the cell layer from the fluid volume by the dimpled protrusions, thereby improving power density (for fuel cell operation) or rate of hydrogen production (for electrolyser cell operation) of each cell unit.

The first fluid volume may have a height which is between 30% and 80%, preferably between 40% and 60%, of a height of the second fluid volume. A maximum variation of the height of the first and/or second fluid volume may be between 5% and 50%, preferably between 5% and 30%, more preferably between 10% and 20% of the maximum height of the first fluid volume.

The cell layer may comprise one or more electrochemically active cell regions.

The 3D region may overlay all of the electrochemically active cell region.

The height of the mid-plane region may be varied as a discontinuous transition. The height of the mid-plane region may be varied as a discontinuous (or stepped) transition. In this case, the mid-plane region includes at least two respective heights for the first and/or second fluid volumes with (discontinuous) steps therebetween. Such stepped transitions are straightforward to form by pressing and their effect on the fluid flow rates in each volume is straightforward to determine.

Preferably, there are at least three respective heights for the first and/or second fluid volumes, with stepped transitions therebetween.

Alternatively, the height of the mid-plane region may be varied as a continuous transition. The mid plane height may vary in a continuous manner in one direction. The continuous variation may be in the form of a straight (flat) inclined plane, or a curved profile. The mid-plane region may be curved in one or two dimensions. In other words, the mid-plane region comprises a curved plane. This provides fluid volume(s) of continuously varying height, and thereby controls the flow rate across the extent of the electrochemically active cell region. The height may be tailored to control fluid across the extent of the electrochemically active cell region. This may evenly distribute fuel and/or oxidant across the extent of the electrochemically active cell region and/or may be used to aide cooling of the cell unit by increasing flow rate of cooling fluid (e.g., oxidant) in areas of the cell unit that benefit from additional cooling. It may be that the mid-plane region comprises two sub-regions: a first sub-region in which the mid-plane is a flat plane and a second sub-region in which the mid-plane is curved. The first sub-region may be disposed to the perimeter of the separator plate and the second sub-region towards the centre thereof. This ensures that the perimeter of the separator plate is planar, to simply adjoining of the separator plate to other plates (e.g., spacer plate and/or cell layer) in the cell unit.

A continuous transition for the variation of the mid-plane height is further advantageous for the reason that the continuous transition is gradual, and so is unlikely to disrupt laminar flow in the first and second fluid volumes.

The electrochemical cell unit may have an inlet to and an outlet from the first fluid volume positioned towards opposing edges of the cell unit with the electrochemically active cell region positioned therebetween, and wherein the at least one direction of height variation in the mid-plane region is such that the height of the first fluid volume is smaller in a central area of the cell unit than in an area adjacent to edge of the cell unit.

The inlet to and outlet from the first fluid volume may be two corresponding fluid ports positioned with the perimeter of the cell unit, the first fluid thereby being internally manifolded. The inlet to and outlet from the first fluid volume may comprise one or more inlet ports and one or more outlet ports, respectively, provided in the separator plate. Corresponding ports will usually be provided in the cell layer, those ports aligned with the ports in the separator plate to form fluid passageways for delivery of first fluid to and exhaust of first fluid from the first fluid volume of the cell unit. Alternatively, the inlet to and outlet from the first fluid volume may be externally manifolded using fluid passageways which are outside the footprint of the cell unit.

The central area of the cell unit may have one or both of length and width which is equal to a characteristic dimension (e.g. diameter or width) of the inlet to and an outlet from the first fluid volume. In some cases, the central area has a width equal to the characteristic dimension of the inlet to and an outlet from the first fluid volume and a length which is equal to or less than (e.g. 50-70% of) the distance between the inlet to and an outlet from the first fluid volume.

The smaller height of the first fluid volume in the central area of the cell unit provides a restriction to fluid flow rate in that part of the fluid volume, while the larger height to the edges of the cell unit provide lesser restriction. These edges may include all edged, including those which the inlet to and an outlet from the first fluid volume are positioned towards, or may only include edges other than those which the inlet to and an outlet from the first fluid volume are positioned towards. The first fluid flow rate in the areas of larger height is increased relative to the flow rate that would be present if the mid-plane were to not vary in height. As a result, the varying mid-plane height causes the first fluid to be more evenly distributed over the extent of the electrochemically active cell region (that usually being disposed between the inlet to and outlet from the first fluid volume). Since the heights of the first and second fluid volumes are interrelated, the smaller height of the first fluid volume leads to a larger height for the second fluid volume, and correspondingly greater second fluid flow rate. The greater second fluid flow rate may be beneficial, for example for even thermal distribution across the areal extent of the cell units.

The at least one direction of height variation in the mid-plane region may be generally perpendicular to a straight line between an inlet to and an outlet from the first fluid volume, and the height of the first fluid volume may be smaller along the straight line than to at least one side of the straight line.

In other words, a height of the first fluid volume may be smaller along the straight line between the inlet to and the outlet from the first fluid volume and the height of the first fluid volume may be larger in an area to at least one side of the straight line. It will be understood that the straight line may be characteristic of a sub-region (e.g. along the centre thereof) having a width which is greater than or equal to a width (or diameter) of the inlet and outlet. Preferably, the height variation is symmetric about the straight line, in which case the larger height is provided to both sides of the straight line. The inlet to and outlet from the first fluid volume may comprise one or more inlet ports and one or more outlet ports, respectively, provided in the separator plate. Corresponding ports will usually be provided in the cell layer, those ports aligned with the ports in the separator plate to form fluid passageways for delivery of first fluid to and exhaust of first fluid from the first fluid volume of the cell unit.

The smaller height of the first fluid volume along the straight line provides a restriction to fluid flow rate along that straight line, while the larger height to the side(s) of that line provide lesser restriction. The first fluid flow rate in the areas of larger height is increased relative to the flow rate that would be present if the mid-plane were to not vary in height. As a result, the varying mid-plane height causes the first fluid to be more evenly distributed over the extent of the electrochemically active cell region (that usually being disposed between the inlet to and outlet from the first fluid volume). Since the heights of the first and second fluid volumes are interrelated, the smaller height of the first fluid volume leads to a larger height for the second fluid volume, and correspondingly greater second fluid flow rate. The greater second fluid flow rate may be beneficial, for example for even thermal distribution across the areal extent of the cell units.

In other words, at least one direction across the active cell region is perpendicular to the direction of fluid flow in the first fluid volume.

In some cases, the at least one direction of height variation in the mid-plane region has no component which is generally parallel to a straight line between an inlet to and an outlet from the first fluid volume. However, in some cases the at least one direction of height variation in the mid-plane region has two directions in which the height varies (i.e. components parallel and perpendicular to the straight line between an inlet to and an outlet from the first fluid volume.

In an alternative example, the electrochemical cell unit has an inlet to and an outlet from the first fluid volume positioned towards opposing edges of the cell unit with the electrochemically active cell region positioned therebetween, and the at least one direction of height variation in the mid-plane region is such that the height of the first fluid volume decreases from the inlet to the outlet of the first fluid volume. This may improve utilisation of the first fluid in the electrochemical cell unit.

In this example, the electrochemical cell unit may include an inlet to and an outlet from the second fluid volume positioned towards or outwith opposing edges of the cell unit with the electrochemically active cell region positioned therebetween, the inlet and outlet of the second fluid volume positioned such that the height of the second fluid volume increases from the inlet to the outlet of the second fluid volume. When operated as a fuel cell with the first fluid volume for fuel and the second fluid volume for oxidant, the increasing height of the second fluid volume along the second fluid volume flowpath increases flow rate of the second fluid in relatively hotter areas of the stack (because of the co-flow arrangement of fuel and oxidant - downstream areas of the first fluid volume are typically hotter in fuel cell operation than upstream areas) thereby improving cooling and increasing fuel cell performance.

In cases where the inlet to and outlet from the second fluid volume are positioned towards opposing edges of the cell unit, the second fluid volume is internally manifolded. In cases where the inlet to and outlet from the second fluid volume are positioned outwith opposing edges of the cell unit, the second fluid volume is externally manifolded, this may allow for increased surface area of the electrochemically active cell region.

In this example, the electrochemical cell unit may include a bypass for second fluid around a portion of the 3D region proximal to the inlet to the second fluid volume. This further increases flow rate of the second fluid in relatively hotter areas of the stack (because of the co-flow of fuel and oxidant) thereby improving cooling and increasing fuel cell performance.

Preferably, the 3 dimensional (3D) region overlies all of the electrochemically active cell region. Where, as is preferred, the 3D region fully overlies the electrochemically active cell region, variations in the mid-plane region can be used to direct fluid over the extent (i.e. evenly distribute) of the electrochemically active cell region, thereby improving performance of the cell unit. The design of the 3D region and dimpled protrusions preferably allows mixing within the full extent of the first fluid volume and within the full extent of the second fluid volume.

Although preferable, the 3D region of the separator plate need not fully overlie the electrochemically active area, if, for example, a tailored mid-plane height is not required in say a downstream end portion of the electrochemically active area.

Furthermore, the 3D region of the separator plate with a tailored mid-plane height may extend beyond the electrochemically active cell region that it faces, for example, if a tailored height is desirable in a portion of the separator plate immediately upstream of active cell region.

Preferably, the dimpled protrusions of the first and second plurality of dimpled protrusions are shaped such that their outermost portions do not comprise any laterally extending contact portions that extend heightwise the full height of a fluid volume so as to form a channel within that fluid volume within which flow is constrained.

As a result, fluid pathways in the fluid volumes may cross one another at a plurality of locations, and fluid can mix within the fluid volumes.

Preferably, the first side of the separator plate faces the cell layer and a contact portion of each of the first plurality of dimpled protrusions contacts the cell layer.

The first plurality of dimpled protrusions contact the cell layer, thereby providing electrical contact between the separator plate and the cell layer (within which the separator plate is disposed). The contact also provides mechanical support for each plate, and transfers a compression force through a stack of cell units. In turn, that compression force provides good electrical contact between dimpled protrusions and the cell layer. Contact portions of the second plurality of dimpled protrusions are configured to contact a cell layer of a neighbouring cell unit in a stack of cell units, in order to provide electrical and mechanical contact therewith.

Outermost points of the dimpled protrusions may be provided with a flat top to form the contact portions.

In an example, the contact portion of each of the first plurality of dimples and a contact portion of each of the second plurality of dimples respectively form first and second planes, the first and second planes each being planar and parallel to one another.

This enables a plurality of the electrochemical cell units to be stacked one atop another into a stack of cell units.

The present invention is applicable to any type of electrochemical cell in which a metal separator sheet overlies a cell layer in the respective cell unit and the (e.g. planar) cells are stacked upon one another in use. The type of cell may include, for example, a PEM cell, solid oxide cell, or proton conducting cell. The cell architecture may be one where the cell chemistry layer is structurally supported by a metal substrate, or a ceramic, for example, by an anode, electrolyte or cathode layer.

The architecture of the cell unit may be selected from one of the following: metal-supported, anode-supported, electrolyte-supported, or cathode-supported architecture.

Preferably, the cell unit is a metal-supported cell unit such that the cell layer comprises a metal support plate carrying, on a first side thereof, the electrochemically active cell region provided over a porous region.

In some examples the porous region is formed by holes drilled into the metal support plate - usually laser drilled.

In some examples the (active) fuel cell chemistry layers takes the form of an electrochemically active layer comprising an anode, an electrolyte and a cathode formed (e.g. coated or deposited) onto the metal support plate over the porous region that is provided within the metal support plate in such embodiments. This arrangement with the (non self-supporting, thin) electrochemically active cell region provided directly on the metal support plate requires the minimum number of components. The metal support plate thus performs a dual function of supporting the electrochemically active cell region and defining the fluid volume (together with the separator plate). Moreover, it will be appreciated that both the metal support plate and the separator plate have an oxidant-exposed side and a fuel-exposed side, and thus are components that are subjected to a demanding dual atmospheric environment.

In an alternative framed embodiment, the porous region is provided on a respective plate (e.g. metal foil) over which the electrochemically active cell region is formed (e.g. coated or deposited), and the separate respective plate (carrying the electrochemically active cell region) is provided over a window (e.g. a frame) on the metal support plate.

There can be multiple areas of electrochemically active cell region. For example there can be multiple areas of small holes in the metal support plate covered by separate, respective electrochemically active cell regions. Alternatively there can be multiple windows in the metal support plate and multiple separate plates onto (over) which the electrochemically active cell region are formed located above those windows. The or each separate plate may be welded onto the metal support plate over a window in the metal support plate.

In an example, at least one of the separator plate and the metal support plate comprises flanged perimeter features formed by pressing the plate to a concave configuration; and the separator plate and the metal support plate are directly adjoined at the flanged perimeter features to form the first fluid volume therebetween, optionally by welding.

The cell unit may be sealed around the flanged perimeter features to form the first fluid volume. Sealing may be by means of a weld around the flanged perimeter feature. Weld(s) may also be used around ports formed in the separator plate and cell layer to seal the first fluid volume from the second fluid volume. The cell may comprise a metal substrate and a separator plate, at least one of which has a flanged perimeter feature. This reduces the number of components, as a spacer is not required, thereby reducing material wastage. It may also conveniently electrically connect the two metal plates.

The first side of the separator plate may face a second side of the metal support plate (of the cell unit in which the separator plate is disposed), the second side of the metal support plate opposite to the first side upon which the electrochemically active cell region is carried. In this case, the height of first plurality of dimpled protrusions may be equal to the height of the flanged perimeter features, such that the first plurality of dimpled protrusions and the flanged perimeter features both contact the second side of the metal support plate. In other words, a flat plane formed by the peaks of the dimpled protrusions coincides with a contact area of the flanged perimeter features. Preferably, the flanged perimeter features are formed in the separator plate (i.e. not in the metal support plate) in a same step as forming the 3D region therein. This may obviate the need for forming the metal support plate.

Preferably, at least one of the separator plate and the metal support plate is provided with shaped port features formed around the at least one fluid port by pressing, which shaped port features extend towards the other plate, and elements of the shaped port features are spaced from one another to define fluid pathways between the elements from the port to enable passage of fluid from the at least one first fluid port to the first fluid volume. Where shaped port features are formed in the separator plate, they may be formed in a same step as forming the 3D region therein.

In an alternative to the flanged perimeter features, the electrochemical cell unit comprises a spacer plate disposed between the metal support plate and separator plate, the spacer plate having an aperture therein which defines the first fluid volume, and the metal support plate, spacer plate, and separator plate are joined around their perimeter.

In this case, the cell layer (metal support plate thereof) and the separator plate are connected together indirectly to form the stacked arrangement, with a (flat) metal spacer plate disposed between them. The first side of the separator plate may face the spacer plate, and the first plurality of dimpled protrusions extend through the aperture in the spacer plate towards the cell layer. The cell layer (metal support plate thereof), separator plate, and intermediate metal spacer plate may be sealingly connected together, at least around a periphery thereof, for example, by welding through all three components. When a spacer is used, fluid usually jets out of narrow passageways in the spacer in only a limited number of directions. Hence, the present invention is especially applicable here in that it encourages an even distribution of fluid to the active cell region despite the limited ingress.

When a spacer is disposed between the two separate metal plates, this has the disadvantage of an extra component being required in the stack, but has the advantage that flat planar metal plates may be used upon which the electrochemically active cell region may conveniently be directly laid down by conventional coating or spraying deposition techniques. The spacer may comprise a frame or flat peripheral component (positioned beyond the electrochemically active cell region) that is sandwiched between flat metal substrates and that creates a volume for, and sealingly surrounds, the first fluid volume.

The first side of the separator plate may face a second side of the metal support plate (of the cell unit in which the separator plate is disposed), the second side of the metal support plate opposite to the first side upon which the electrochemically active cell region is carried. In this case, the height of first plurality of dimpled protrusions may be equal to the thickness of the spacer plate, such that the first plurality of dimpled protrusions and a side of the spacer plate opposite the separator plate both contact the second side of the metal support plate. In other words, a flat plane formed by the peaks of the dimpled protrusions coincides with a contact area of the spacer plate.

Preferably, the first fluid volume is for fuel, and the second fluid volume is for oxidant.

Preferably, the height of the first fluid volume is less than the height of the second fluid volume.

Preferably the height of the first fluid volume is less than the height of the second fluid volume across the whole mid-plane region. Alternatively, the variation of the height of the mid-plane region is such that the height of the first fluid volume is less than the height of the second fluid volume in some portions of the cell unit and the height of the first fluid volume is greater than the height of the second fluid volume in portions of the cell unit.

In an example, the first fluid volume may be for fuel, and the second fluid volume may be for oxidant. In such cases, and for operation of the electrochemical cell unit as a fuel cell, the height of the first fluid volume may be less than the height of the second fluid volume. In contrast, and for operation of the electrochemical cell unit as an electrolyser cell, the height of the first fluid volume may be greater than the height of the second fluid volume.

Preferably, at least one fluid port is provided in each of the separator plate and the cell layer, these being aligned to form the first fluid passageway within the perimeter of the separator plate and the cell layer, each port in fluidic communication with the first fluid volume.

Preferably, there are at least a first and a second fluid ports, these being aligned to form respective first and second fluid passageways within the perimeter of the separator plate and the cell layer, and in fluidic communication with the first fluid volume, wherein the first fluid passageway is configured to supply first fluid to the first fluid volume, and the second fluid passageway is configured to exhaust first fluid from the first fluid volume. In this case, the first and second fluid passageways are provided at or near opposed cell ends, and the electrochemically active cell region is disposed between the first and second fluid passageways. The opposed cell ends may be opposite sides of a square or rectangular cell, or may be opposite ends of the diameter across a circular cell.

According to an alternative aspect, there is provided an electrochemical cell unit comprising:
a cell layer comprising an electrochemically active cell region (wherein the cell layer may be a metal support plate carrying the electrochemically active cell region provided over a porous region), and
a separator plate having a first plurality of dimpled protrusions outwardly extending from a mid-plane of the separator plate and forming protrusions on a first side of the separator plate, wherein:
   the interconnect plate and the metal support plate overlie one another to form a repeat unit;
   the first plurality of dimpled protrusions are distributed over an extent of the separator plate that overlies at least part of (preferably overlies the entirety of) the electrochemically active cell region and the dimpled protrusions on the first side of the separator plate contact the cell layer (the metal support plate or the electrochemically active area thereof), thereby spacing the separator plate from the cell layer (the metal support plate or the electrochemically active area) and defining a first fluid volume therebetween; and
   the separator plate has at least a first sub-region and a second sub-region, wherein the first plurality of dimpled protrusions comprise at least a first subset of dimpled protrusions in the first sub-region and a second subset of dimpled protrusions in the second sub-region, the first subset of dimpled protrusions having a first height and the second subset of dimpled protrusions having a second height, thereby creating corresponding first and second sub-regions of separation between the mid-plane of the separator plate and the cell layer (the metal support plate or electrochemically active area thereof).

The mid-plane of the separator plate (and height of the first and second subset of the dimpled protrusions) is be varied in order to direct first fluid within the first fluid volume - for example, to promote even distribution of fuel or oxidant across the electrochemically active cell region, and/or to improve thermal distribution across the electrochemically active cell region.

The separator plate may comprise a second plurality of dimpled protrusions outwardly extending from a mid-plane of the separator plate and forming protrusions on a second side of the separator plate. The second plurality of dimpled protrusions may have at least first and second subsets of differing heights which protrude from a varying mid-plane of the separator plate, in a similar way to the first plurality of dimpled protrusions.

According to a further alternative aspect, there is provided an electrochemical cell unit comprising:
a separator plate having a first side and a second side; and
a cell layer comprising an electrochemically active cell region (wherein the cell layer may be a metal support plate carrying the electrochemically active cell region provided over a porous region);
the separator plate and the cell layer overlying one another to form a repeat unit, and defining a first fluid volume therebetween;
the separator plate having a first plurality of dimpled protrusions on a first side, wherein the first plurality of dimpled protrusions are distributed over an extent of the separator plate that corresponds to the extent of the electrochemically active area, and the first plurality of dimpled protrusions thereby define fluid pathways in the first fluid volume that are tortuous and/or cross one another at a plurality of locations;
wherein there exist at least two flowpaths in the first fluid volume between opposing ends of the cell unit, each of the flowpaths experiencing different volume depths of the first fluid volume.

The differing volume depths may be a result of a varying mid-plane of the separator plate, the mid-plane being that from which the dimpled protrusions extend. A height of the dimpled protrusions varies in correspondence with the varying mid-plane. A first flowpath (i.e. a streamline) of the at least two flowpaths may take a shortest possible distance between an inlet to and an exhaust from the first fluid volume, and a second flowpath of the at least two flowpaths may take a longer distance between an inlet to and an exhaust from the first fluid volume. The second flowpath does not cross the first flowpath. In this case, the volume depth for the first flowpath is less than for the second flowpath. This has the effect of increasing a flow rate of first fluid along the second flowpath (relative to the flow rate that would exists if the volume depths for first and second flowpaths were equal), and therefore more evenly distributing fluid in the first fluid volume.

The separator plate may have a second plurality of dimpled protrusions outwardly extending from the separator plate and forming protrusions on a second side of the separator plate. The second plurality of dimpled protrusions may vary in height in a similar way to the first plurality of dimpled protrusions. The separator plate may be a pressed sheet, in which case volume depth of a second fluid volume, on the second side of the separator plate, varies in correspondence with the volume depth of the first fluid volume.

According to a further alternative aspect, there is provided an electrochemical cell unit comprising:
a cell layer comprising an electrochemically active cell region and,
a separator plate comprising a metal sheet overlying the cell layer
wherein the separator plate has a selectively shaped three dimensional (3D) region that at least partially, or fully, overlies the electrochemically active cell region;
and in that three dimensional (3D) region:
   the metal sheet has a first plurality of outwardly extending dimpled protrusions that define the height of a first fluid volume on a first side of the separator plate;
   additionally, the metal sheet has a second plurality of outwardly extending dimpled protrusions that define the height of a second fluid volume on a second side of the separator plate;
   whereby a mid-plane region is disposed between the protrusions; and,
   the mid-plane region is so shaped as selectively to vary its height in at least one direction across the active cell region such that the height of one or both of the first and second fluid volumes are correspondingly increased and/or decreased as a result.

There is further provided an electrochemical cell stack comprising a plurality of the above electrochemical cell units, wherein:
the first side of the separator plate of a first electrochemical cell unit faces the cell layer of the first electrochemical cell unit and encloses (or defines) the first fluid volume therebetween, and
the second side of the separator plate of the first electrochemical cell unit faces a cell layer of a second, neighbouring, electrochemical cell unit in the stack of cell units and encloses (or defines) the second fluid volume therebetween.

In this case, the first plurality of dimpled protrusions on the separator plate of the first electrochemical cell unit may contact the cell layer of the first electrochemical cell unit, in which case the second plurality of dimpled protrusions on the separator plate of the first electrochemical cell unit may contact the cell layer of the second, neighbouring electrochemical cell unit. Typically, the electrochemically active cell region is disposed to the first side of the cell layer (e.g., on or supported by a first side of a metal support plate), and so the second plurality of dimpled protrusions contact (an outermost layer of) the electrochemically active cell region of the second, neighbouring electrochemical cell unit. Thus, the first plurality of dimpled protrusions typically contact elsewhere (e.g. contact the second side of the metal support plate) on the cell layer of the first electrochemical cell unit.

The electrochemical cell stack may further comprise means for supply and exhaust of first fluid from the first fluid volume positioned towards opposing edges of the cell unit with the electrochemically active cell region positioned therebetween, and wherein the at least one direction of height variation in the mid-plane region is such that the height of the first fluid volume is smaller in a central area of the cell unit than in an area adjacent to edge of the cell unit.

The electrochemical cell stack may further comprise means for supply and exhaust of first fluid from the first fluid volume, wherein the electrochemically active cell region is disposed between the means for supply and exhaust, wherein the at least one direction of height variation of mid-plane is perpendicular to a straight line between the means for supply and exhaust of first fluid, and the height of the first fluid volume is smaller along the straight line than to at least one side of the straight line.

Preferably, the height variation is symmetric about the straight line, in which case the larger height is provided to both sides of the straight line.

In some examples, the electrochemical cell stack includes means for supply and exhaust of first fluid from the first fluid volume, wherein the electrochemically active cell region is disposed between the means for supply and exhaust, and wherein the at least one direction of height variation in the mid-plane region is such that the height of the first fluid volume decreases from the means for supply to the means for exhaust of the first fluid volume.

In such examples, the electrochemical cell stack may include means for supply and exhaust of second fluid from the second fluid volume, wherein the electrochemically active cell region is disposed between the means for supply and exhaust of second fluid from the second fluid volume, and wherein the at least one direction of height variation in the mid-plane region is such that the height of the second fluid volume increases from the means for supply to the means for exhaust of the second fluid volume. Preferably, the electrochemically active cell region and the means for supply and exhaust of first fluid from the first fluid volume are disposed between the means for supply and exhaust of second fluid from the second fluid volume.

In such examples, the electrochemical cell stack may be positioned within an enclosure, and there may be provided a baffle configured to provide a bypass for second fluid around a portion of the 3D region proximal to the means for supply of second fluid to the second fluid volume.

The means for supply and exhaust of first fluid from the first fluid volume may comprise at least one fluid port provided through the separator plate and the cell layer which is in fluid communication with the first fluid volume, wherein the at least one fluid port of the respective cell units align to form at least one passageway extending in the stack direction, these being internally manifolded passageways. The internally manifolded passageways are defined by the aligned at least one fluid ports, those ports within the perimeter of each cell unit.

In such a stack with internally manifolded passageways, typically:
each electrochemical cell unit comprises two first fluid ports in fluid communication with the first fluid volume with the electrochemically active cell region disposed therebetween,
the first fluid port is for supply of first fluid to the first volume and the second fluid port is for exhaust of first fluid from the first fluid volume, and
the at least one direction of height variation in the mid-plane region is generally perpendicular to a straight line between the first fluid port and the second fluid port, and wherein the height of the first fluid volume is smaller along the straight line than to at least one side of the straight line.

In this case, the first and second ports are aligned to define respective first and second first fluid passageways extending in stack direction, respectively forming inlet and outlet passageways.

In a further internally manifolded stack typically:
each electrochemical cell unit comprises four first fluid ports in fluid communication with the first fluid volume arranged in a cross-shape with the electrochemically active cell region disposed therebetween,
two neighbouring fluid ports are for supply of first fluid to the first fluid volume and the remaining two fluid ports are for exhaust of first fluid from the first fluid volume.

Each port of the four ports may be aligned to define four respective first fluid passageways extending in stack direction, respectively forming two inlet and two outlet passageways. In this case, the cell units may have a rectangular shape, with each of the four ports disposed towards a different corner of the cell unit. This configuration of first fluid ports may also be used with other cell shapes, for example hexagonal with the two neighbouring ports for inlet of first fluid disposed towards opposite ends of a first side, and the two neighbouring ports for exhaust of first fluid disposed towards opposite ends of a second side, the second side opposite the first side.

In yet a further internally manifolded stack typically:
each electrochemical cell unit comprises four first fluid ports in fluid communication with the first fluid volume arranged in a cross-shape with the electrochemically active cell region disposed therebetween,
two opposing fluid ports are for supply of first fluid to the first fluid volume and the remaining two opposing fluid ports are for exhaust of first fluid from the first fluid volume.

Each port of the four ports may be aligned to define four respective first fluid passageways extending in stack direction, respectively forming two inlet and two outlet passageways. In this case, the cell units may have a rectangular shape, with each of the four ports disposed towards a different edge of the cell unit, and mid-way along the length of the cell unit. In the case of a rectangular cell, the inlet ports are at centre of short edges and outlet at centre of long edges (or vice-versa). Opposing ports may be ports which are disposed to opposite sides of the electrochemically active cell region.

In a further internally manifolded stack typically each electrochemical cell unit comprises three first fluid ports in fluid communication with the first fluid volume arranged in a V-shape, wherein either:
a) a first port is for supply of first fluid to the first fluid volume and second and third ports are for exhaust of first fluid from the first fluid volume, the first port opposing the second and third fluid ports, and the electrochemically active cell region disposed therebetween, or
b) a first port is for exhaust of first fluid from the first fluid volume and second and third ports are for supply of first fluid to the first fluid volume, the first port opposing the second and third fluid ports, and the electrochemically active cell region disposed therebetween.

In other words, the three first fluid ports in fluid communication with the first fluid volume arranged at the corners of a V-shape with the electrochemically active cell region disposed therebetween, the port at the point of the V-shape one of an inlet or outlet, and the remaining two ports the other of inlet and outlet. In this case, the cell units may have a rectangular shape, in which case the ports are typically disposed towards opposing short edges. This arrangement may also be suited to triangular cell units, with one port disposed towards each corner.

Each electrochemical cell unit in the stack may further comprise a second fluid mid-port disposed midway along length and width of each cell unit, the second fluid mid-port in fluid communication with second fluid volume wherein the second fluid mid-port of respective cell units align to form at least one mid-passageway extending in the stack direction.

There may be provided at least one second fluid end passageway in fluid communication with the second fluid volume is provided that extend in the stack direction at or near a cell end, the at least one second fluid end passageway being an externally manifolded passageway beyond each cell unit.

Usually, the first fluid volume is a fuel volume and the second fluid volume is an oxidant volume. Pressure drops across the active cell chemistry length are typically more pronounced for oxidant, and so it is preferable that the second, externally manifolded, fluid is oxidant because the gap between adjacent cell units is generally larger than a gap between metal substrate and separator plate in a cell unit, which defines the second fluid volume. This means that the first fluid volume, for fuel in this case, is contained or sealed within the cell unit and in fluid communication with the first fluid passageway. Further, if the first fluid volume (which is enclosed by the cell unit) were to be adapted for air, then the gap between the metal substrate and separator plate would have to be increased, leading to greater material usage for creating the larger gap, and therefore a greater stack cost.

In a further internally manifolded stack typically the second fluid mid-port is an inlet port for supply of second fluid to the second fluid volume, and each of the at least one second fluid end passageway is for exhaust of second fluid from the second fluid volume.

For cell units of three sides or greater, there may be one second fluid end passageway external to each side of the cell unit (i.e. the number of second fluid end passageways the same as the number of sides of the cell unit). Alternatively, two second fluid end passageways may be provided to opposing cell ends (e.g. opposing short or long edges of a rectangular cell unit, or opposing edges of a hexagonal cell unit), or two pairs of second fluid end passageways may be provided, spaced around the cell unit (e.g., external to each edge of a rectangular cell unit).

Alternatively to providing a second fluid mid-port, the second fluid may be entirely externally manifolded. This maximises the proportion of the layer which is covered by the electrochemically active cell region, thereby improving power density.

In an externally manifolded stack, typically two second fluid end passageways in fluid communication with the second fluid volume are provided that extend in the stack direction at or near opposed cell ends, the second fluid end passageways being externally manifolded passageways beyond each cell unit, and wherein one of the second fluid end passageways is for supply of second fluid to the second fluid volume, and the other of the second fluid end passageways is for exhaust of second fluid from the second fluid volume.

Alternatively, in an externally manifolded stack, four second fluid end passageways in fluid communication with the second fluid volume are provided that extend in the stack direction, arranged in two pairs, the passageways of each pair opposing one another with the electrochemically active cell region disposed therebetween, these being externally manifolded passageways beyond each cell unit, first pair for supply of second fluid to the second fluid volume, the second pair for exhaust of second fluid from the second fluid volume, outlet and inlet passageways alternating around circumference of cell unit.

In a preferred example, each electrochemical cell unit comprises first and second fluid ports provided through the separator plate and the cell layer which are in fluid communication with the first fluid volume, wherein the respective fluid ports of the respective cell units align to form respective first and second passageways extending in the stack direction, these being internally manifolded passageways. In this case, the first fluid port is for supply of first fluid to the first volume and the second fluid port is for exhaust of first fluid from the first fluid volume, and the at least one direction of height variation in the mid-plane region is generally perpendicular to a straight line between the first fluid port and the second fluid port, and wherein the height of the first fluid volume is smaller along the straight line than to at least one side of the straight line. As a result, the first fluid volume typically has a smaller height towards the centre of the cell unit. In this case, the cell unit may have a rectangular shape with the first fluid ports disposed towards opposing short ends of the cell units. Preferably, this first fluid volume is for fuel. Since the height of the second fluid volume varies in correspondence with the height of the first fluid volume (e.g. because the separator plate has been deformed to form the 3D region), the second fluid (oxidant) may be externally manifolded to flow in the same direction as, or in the opposite direction to (i.e. at 180degrees from) the first fluid flow direction. This advantageously provides a greater flow rate of oxidant to the centre of the cell unit, thereby enhancing cooling of the centre of the cell unit when operated as an SOFC.

In the above, first fluid flow paths in the first fluid volume are formed between inlet to and outlet from the first fluid volume, and second fluid flow paths are formed between the inlet to and outlet from the second fluid volume.

In a preferred example, the first and second fluid flow paths are in a co-flow arrangement across the electrochemically active cell region. The fluids may flow in a co-flow arrangement whereby both the first and second fluid flow paths are from an end of the cell unit to an opposing end of the cell unit.

Alternatively, the fluids may be in a counterflow arrangement whereby the first fluid flow path is from a first end of the cell unit to an opposing second end of the cell unit, and the second fluid flow path is from the second end of the cell unit to the opposing first end of the cell unit, or vice-versa.

Alternatively, the fluids may be in a co-counter-flow arrangement whereby the first fluid flow path is from a first end of the cell unit to an opposing second end of the cell unit, and the second fluid flow path is from the respective ends of the cell unit to the centre of the cell unit (or vice-versa). That is, the second fluid flow path is from the mid passageway to the end passageways (or vice-versa) and the first fluid flow path is from an end fluid passageway at one end of the cell to an end passageway at the opposite end of the cell.

Alternatively, the fluids may be in a cross-flow arrangement whereby the first fluid flow path is from a first end of the cell unit to an opposing second end of the cell unit (or vice-versa) and the second fluid flow path is substantially perpendicular to the first fluid flow path, the second fluid flow path being from a third side of the cell unit to a fourth side of the cell unit. The third and fourth sides being different to the opposed first and second sides.

The co-flow arrangement may be preferred because it results in the hottest part cell unit area being toward the end of the cell unit, in contrast to counter-flow where the hottest part of the cell unit is toward the centre of the active cell chemistry regions. Thus, for counter-flow, the measured temperature of exhaust fluid better reflects the hottest temperature of the stack, which is an important parameter because excess heat may lead to cell unit failure. Further, in counter-flow the hottest temperature is typically hotter than in co-flow (all other parameters being equal) therefore a greater fluid flow rate for cooling (typically using oxidant flow) is required in the counter-flow arrangement, thus increasing parasitic loss from blowers or pumps over the co-flow arrangement.

In a second aspect, there is provided a method for manufacturing a separator plate, comprising:
providing a planar metal sheet; and
deforming the metal sheet to provide a three dimensional (3D) region, the three dimensional (3D) region comprising:
   a first plurality of outwardly extending dimpled protrusions that define the height of a first fluid volume on a first side of the separator plate;
   a second plurality of outwardly extending dimpled protrusions that define the height of a second fluid volume on a second side of the separator plate;
   whereby a mid-plane region is disposed between the protrusions; and,
   the mid-plane region is so shaped as selectively to vary its height in at least one direction across the active cell region such that the interrelated respective heights of the first and second fluid volumes are correspondingly increased and decreased as a result.

Because the separator plate is formed by deforming (pressing) a metal sheet, a dimpled protrusion on a first side of the separator plate will manifest as a dimpled cavity on a second side of the separator plate, and likewise for any other features shaped therein. This linkage might be perceived in design terms as a disadvantage, in that a degree of freedom is lost. However, the deforming processes for forming metal sheets can be used economically to produce electrochemical cells on a large scale, whilst also using the linkage to tailor the respective balance between the first and second fluid volumes to achieve an improvement in technical performance having regard to the port arrangement, flow pathways, and thermal profiles in the cell in question. For example in a SOFC, if a height of the mid-plane is such that a fuel volume height is smaller towards the centre of a cell unit, the oxidant volume is correspondingly higher towards the centre of the cell unit, thereby increasing the flow rate of oxidant in across the centre of the cell unit. The oxidant may be used to cool the cell unit, and the centre of the cell units is typically the hottest part of a cell unit. The relatively increased flow rate of oxidant across the centre beneficially cools the centre of the cell unit.

The method may further comprise forming at least an inlet to and an outlet from the first fluid volume. These may be formed in the step of deforming the metal sheet to provide the three dimensional (3D) region by forming respective ports through the metal sheet.

Preferably, any one or more of the following 3D features are also formed in the separator plate in the same step in which the mid-plane region and protrusions are formed: shaped port features, flanged perimeter features and other shaped flow control features.

The method may comprise providing a cell layer comprising a metal support plate carrying, on a first side thereof, an electrochemically active cell region and providing the above-mentioned separator plate, adjoining the metal support plate and the separator plate such that the three dimensional (3D) region of the separator plate overlies the cell layer (i.e. so that the 3D region overlies at least part of, preferably all of, the electrochemically active cell region), optionally wherein the adjoining comprises welding the metal support plate and the separator plate together around their periphery. The metal support plate may be provided with fluid ports corresponding to those formed in the metal sheet (e.g., by pressing).

The method may further comprise stacking a plurality of electrochemical cell units so formed such that the first side of the separator plate of a first electrochemical cell unit faces the cell layer of the first electrochemical cell unit and encloses the first fluid volume therebetween, and the second side of the separator plate of the first electrochemical cell unit faces a cell layer of a second, neighbouring, electrochemical cell unit in the stack of cell units and encloses the second fluid volume therebetween.

The first fluid volume and the second fluid volume may be configured co-flow therein (i.e. the volumes may be configured such that first fluid and second fluid flow in substantially the same direction). The first and second fluids may be in co-flow over two opposed faces of the separator plate. The stack (and/or cell units therein) may be provided with at least an inlet to and outlet from the first fluid volume. Likewise, at least an inlet to and outlet from the second fluid volume may be provided. There is further provided a separator plate formed by the above method.

There is further provided use of the above electrochemical cell unit, wherein the shape of the mid-plane region is selectively tailored, having regard to the number and location of the respective inlet(s) and outlet(s) through which the first fluid enters and leaves the cell unit during operation, to optimise the distribution of the first fluid in the first fluid volume. Alternatively, or additionally, the shape of the mid-plane region may be selectively tailored, having regard to the number and location of the respective inlet(s) and outlet(s) through which the second fluid enters and leaves the cell unit during operation, to optimise the distribution of the second fluid in the second fluid volume.

As indicated above, "cell units" or "cell stack" is used to refer to "electrochemical cell units" or "electrochemical cell stack".

Particular and preferred aspects of the invention are set out in the accompanying independent claims. Combinations of features from the dependent claims may be combined with features of the independent claims as desired and appropriate and not merely as explicitly set out in the claims. The term "comprising" as used herein to specify the inclusion of components also includes embodiments in which no further components are present.

An enabling disclosure of the present invention, to one of ordinary skill in the art, is provided herein. Reference now will be made in detail to embodiments of the invention, one or more examples of which are set forth below. Each example is provided by way of explanation of the invention, and not limitation of the invention.

### Brief Description of the Drawings

Features of the present invention will now be described in further detail, by way of various embodiments, and just by way of example, with reference to the accompanying drawings (which drawings are not to scale, and in which the height dimensions are generally exaggerated for clarity), in which:
Figure 1 is an exploded perspective view of a prior art cell unit.
Figure 2 is a plan schematic view of a portion of a prior art separator plate.
Figure 3A is an exploded perspective view of two cell units according to the invention. Figs. 3B and 3C are a perspective view and a plan view with relevant cross-sections of the separator plate of Fig. 3A.
Figure 4A is an exploded perspective view of two cell units according to the invention. Figs. 4B and 4C are a plan view and relevant cross-sections of the separator plate of Fig. 4A.
Figure 5 is a plan view and relevant cross-sections of a further separator plate according to the invention.
Figure 6 is a plan view and relevant cross-sections of a further separator plate according to the invention.
Figure 7 is a perspective view of a further separator plate according to the invention.
Figure 8 is a perspective view of a further separator plate according to the invention.
Figure 9 is a plan schematic view of further separator plates according to the invention.
Figure 10 is a plan schematic view of port and manifolding arrangements for first and second fluids according to the invention.
Figure 11 is a plan view and relevant cross-sections of a further separator plate according to the invention.
Figure 12 is a sectional plan view of a stack according to Fig. 11.
Figure 13 is a sectional plan view of a variant of the stack of Fig. 12.

In the following figures and description like reference numerals will be used for like elements in different figures.

### Detailed Description

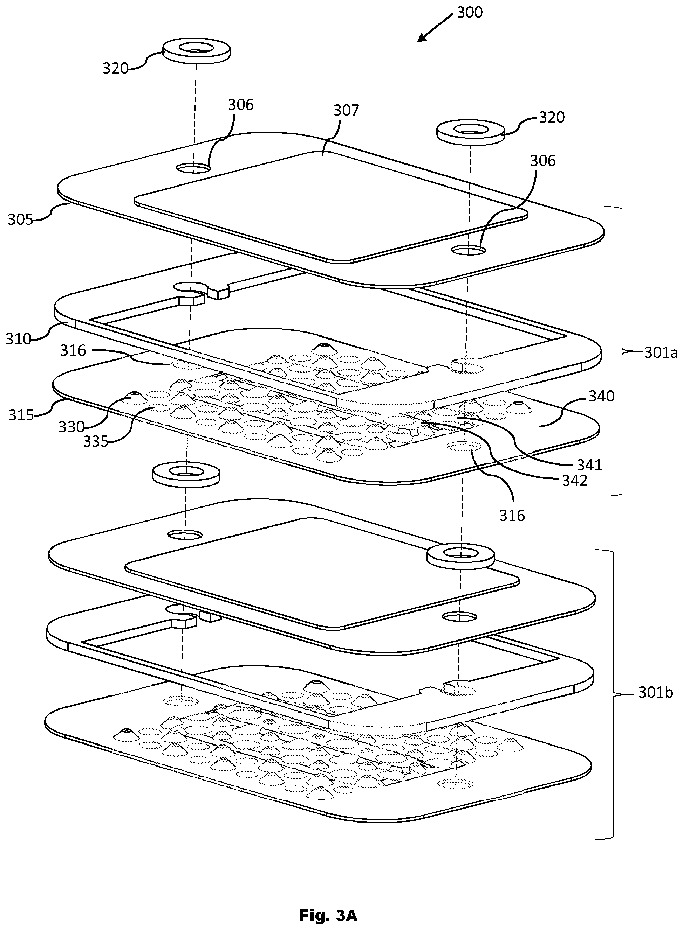

Referring to Fig. 3A, an exploded view of two cell units 301a, 301b in an electrochemical cell stack arrangement 300 is shown. The number of cell units is reduced for illustrative purposes and is typically much larger (for example 300). Each cell unit comprises a cell layer 305 (including a metal support plate or substrate), and a separator (or interconnect) plate 315 and may be similar to those described in the Applicant's earlier patent application WO 2020/126486 A1. The cell layer 305 and the separator plate 315 are each self-supporting plates. A spacer 310 is provided to space the separator plate 315 from the substrate 305. The cell layer 305 includes an electrochemically active cell region 307 comprising respective anode, electrolyte and cathode layers respectively deposited (e.g. as thin coatings/films) on and supported by the metal support plate (e.g. a self-supporting metal/steel plate or foil); the electrochemically active cell region 307 faces the separator plate 315 of an adjacent cell unit.

The metal support plate has a porous region (not shown) surrounded by a non-porous region with the overlaid layers of the electrochemically active cell region being deposited upon the porous region so that gases may pass through the pores from one side of the metal support plate 305 to the opposite side to access the active layer coated thereon. As discussed in WO 2020/126486 A1, the porous region comprises small apertures (holes drilled through the metal foil substrate) (not shown) extending through the metal support plate of the cell layer 305, in a location to overlie the anode (or cathode, depending on the polarity orientation of the electrochemically active cell region 307), which is positioned upon the metal support plate of the cell layer 305. (The plan-view area covered by the respective electrochemically active cell layers is known as the "active cell region".) In a preferred embodiment, the anode (fuel electrode) layer is located adjacent the porous region with an (enclosed) fluid volume within the fuel cell unit 301 comprising a fuel flow volume supplied by fuel entering and exiting via the fluid ports 316, which are thus fuel ports 316. The cathode (air electrode) layer is on the opposite side of electrochemically active cell region 307, i.e. on its outer face, and is exposed to air flowing across that layer during use of the fuel cell unit 301. (A metal substrate with tailored drilled porosity is desirable but the invention is also applicable to metal substrates with alternative porosity e.g. porous metallic foam or porous tapecast metal substrates.)

The cell layer 305 and the separator plate 315 have fluid ports 306 and 316, respectively, that are provided in the plates (for oxidant and/or fuel), disposed towards the centre of opposite edges of the cell unit 301 and disposed to opposite sides of the electrochemically active layered region 307. The spacer plate 310 has open ports which allow fluid communication between the fluid ports 306, 316 and a first fluid volume provided between the metal support plate 305 and the separator plate 315 is defined by the spacer plate 310.

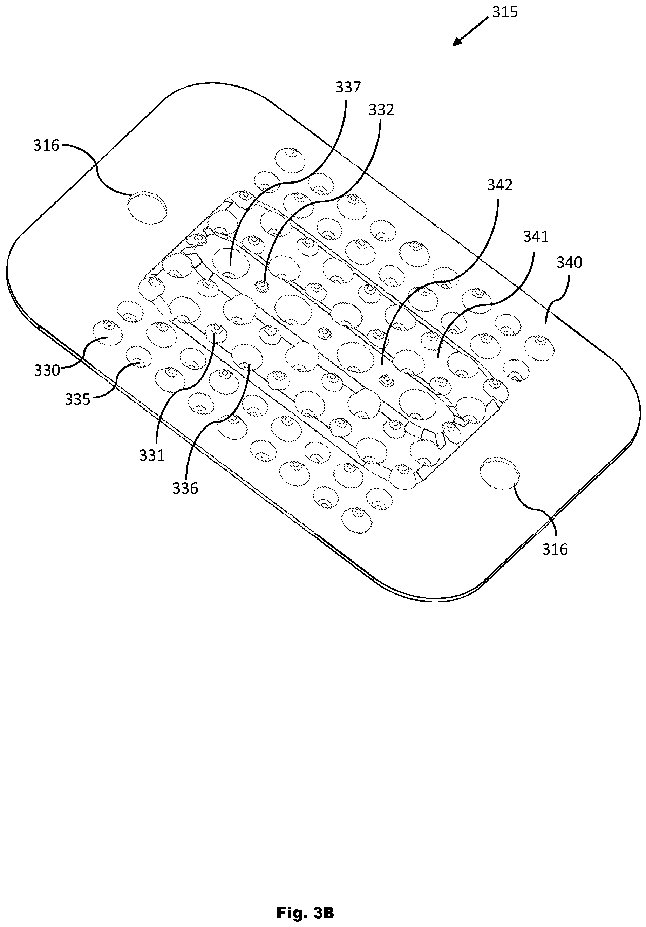

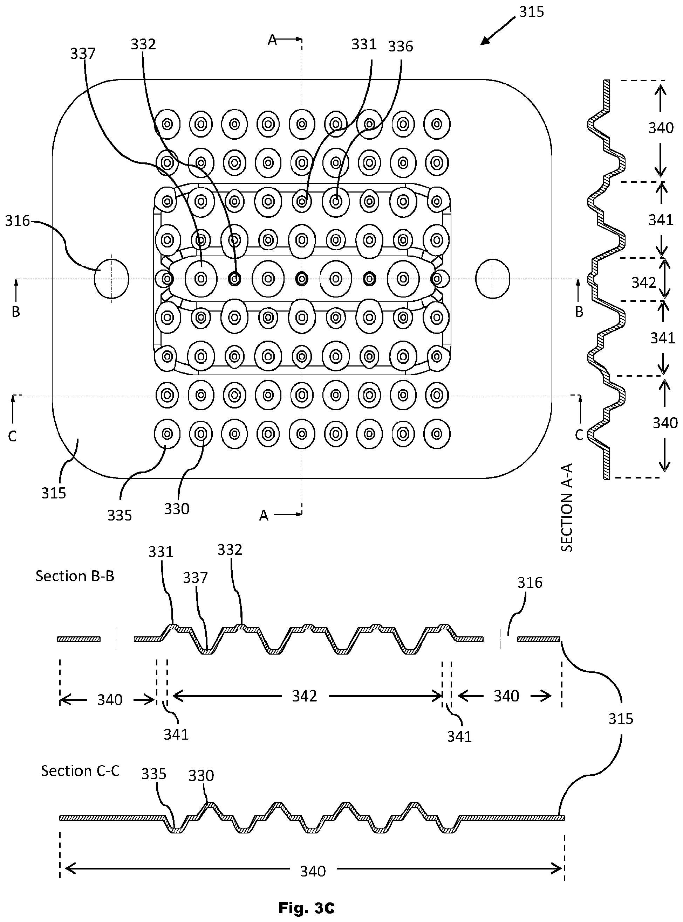

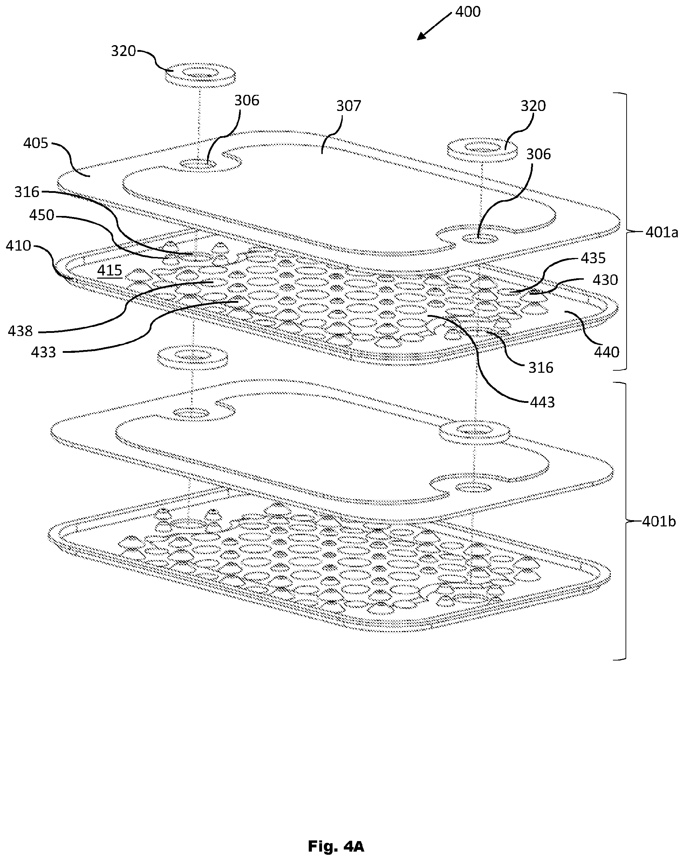

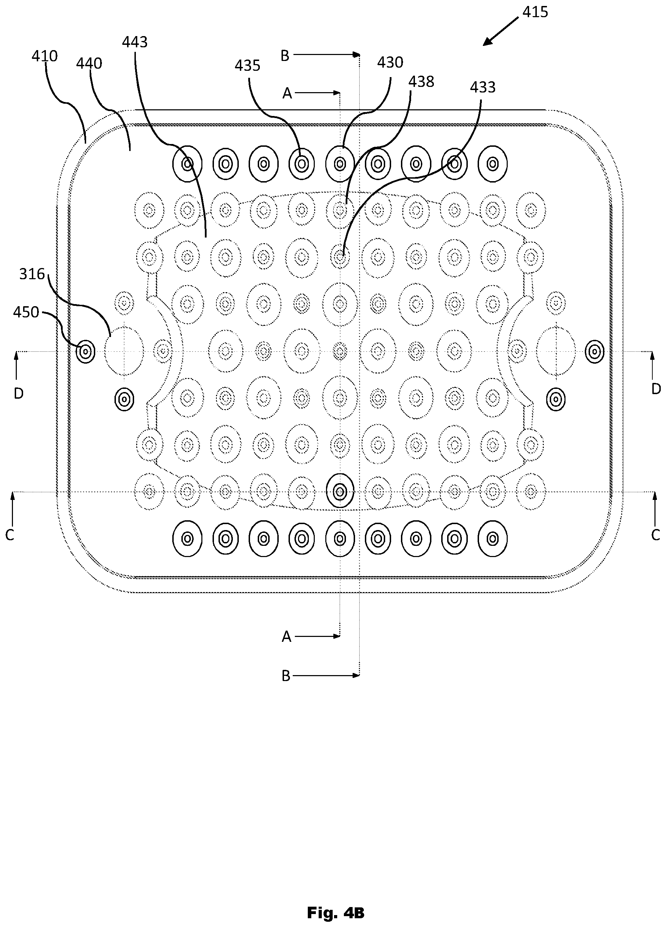

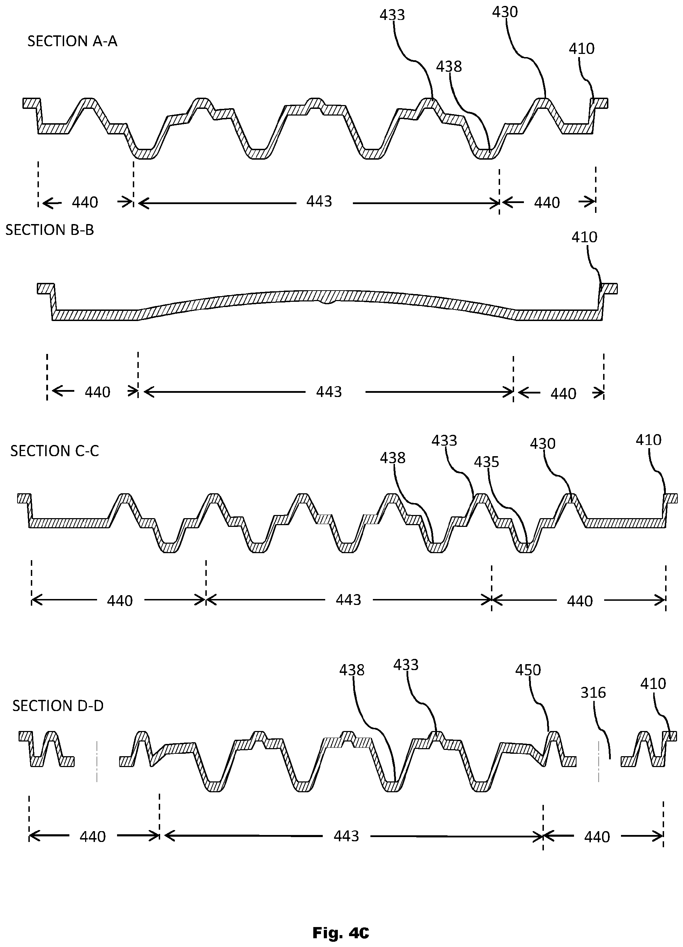

As shown in figure 3, each cell unit 301 comprises three plates or layers - a spacer plate 310 is sandwiched between the cell layer 305 and the separator plate 315 (but may also comprise only two plates or layers: one or both of the metal support plate 305 and the separator plate 315 may comprise flanged perimeter features which protrude towards the other of the metal support plate 306a and the separator plate 306b, obviating the need for spacer plate 310, as explained in greater detail with respect to Fig. 4).

The cell layer 305, spacer 310, and separator plate 315 are stacked upon one another and welded (fused together) around their perimeter to form a single metal-supported repeat cell unit 301a with a first fluid volume in the middle defined by the space provided by the spacer plate 310. Each of the cell layer 305, spacer 310, and separator plate 315 is a self-supporting metal plate, which enables handling of the separate plates before they are welded or fused together. The metal components of the cell stack repeat layer 301a are in electrical contact with one another, with electron flow between them being primarily via the fuse/weld path, thereby avoiding surface-to-surface contact resistance losses.

The stack of cell units 301 in Fig. 3 are stacked with gaskets 320 positioned between neighbouring cell units 301. Each gasket 320 surrounds a fluid port 306, 316 of the cell units 301 and is electrically insulating. The stack of cell units 301, with respective gaskets 320, are positioned one atop another such that corresponding fluid ports 306, 316 in the cell units 301 are aligned to form an internal manifold or chimney through the stack of cell units, through which a fluid may be delivered to, and exhausted from, the cell units (specifically, to the opening between the cell layer 305 and the separator plate 315 of each cell unit 301). The gaskets 320 provide a fluidic seal between their surface and that of the abutting surface. The gaskets 320 are shown as preformed gaskets, but may equally be formed in-situ. They are not electrically conductive. The gaskets may, for example, be made of a vermiculite (e.g. thermiculite), which may provide a superior sealing performance compared to mica or ceramic while requiring much lower load to seal.

In the separator plate, a 3D region is provided which includes dimpled protrusions and a varying mid-plane height. In the 3D region, up and down dimpled protrusions are provided to extend up from a mid-plane region to the cell layer 305 (e.g. the opposite side of metal support plate to that which supports the electrochemically active cell region 307) of its own cell unit 301a and down from the mid-plane region to the cathode (or anode, depending on the polarity orientation of the electrochemically active layers) of a subsequent (or neighbouring) cell unit 301b stacked under this cell unit 301a. In this example, the 3D region of the separator plate 315 fully overlies the electrochemically active cell layer 305, such that the mid-plane height may be suitably tailored over the entire electrochemically active cell region 307. However, the mid-plane height of the 3D region need not be varied over the entire electrochemically active cell region if, for example, an upstream or downstream end of the active cell region does not require the use of height to influence fluid flow. The 3D region may optionally extend beyond the active cell region 307 and may optionally also have a tailored midplane height to influence fluid flow upstream or downstream thereof.

The separator plate 315 is formed from a sheet (e.g. a metal sheet). The mid-plane region is a portion of the sheet between the dimpled protrusions. In Fig. 3, the mid-plane region comprises three mid-plane sub-regions, each of which is a flat plane, the mid-plane sub-regions separated from one another by respective steps. However, the mid-plane (and sub-regions thereof) need not be flat (e.g. as will be described with reference to Fig. 4). The dimpled protrusions are distributed over an area of the separator plate 315 which corresponds to the area of the electrochemically active cell region 307. In other words, the dimpled protrusions have an areal extent which is similar to and positioned underneath that of the electrochemically active cell region. The dimpled protrusions may have an areal extent equivalent to and whose centre is coincident with that of the active cell region 307. The dimpled protrusions may alternate in direction (between up and down) across the separator plate 315 and usually there will exist a similar number of "up" and "down" protrusions in a given area. In other words, the nearest neighbours of a given "up" protrusion will usually be "down" protrusions (and vice-versa). As a result, the dimpled protrusions 330, 335 electrically connect adjacent cell units 301 of a stack to put the electrochemically active cell regions 307 of the stack (usually one on each cell unit) in series with one another.

A distance between the cell layer 305 and the mid-plane of the separator plate 315 varies across the 3D region, by variation of the mid-plane region. The up and down dimpled protrusions vary in height in correspondence with variation of the mid-plane region of the separator plate 315 (as discussed in greater detail below). It will be appreciated that, regardless of the individual dimensions of different protrusions, the overall height (thickness) of the interconnect, i.e. from the bottom of the downward protrusions to the top of the upwards protrusions is always the same.

The dimpled protrusions and varying mid-plane region are formed by deforming or pressing a metal sheet to form the 3D region. The deforming/pressing may be any suitable method for forming a sheet into a suitable configuration, such as, for example, hydroforming or stamping/pressing. A single thin sheet can thus be deformed into the separator plate 315. As a result of the pressing, an outwardly extending dimpled protrusion on one side of the separator plate 315 forms a cavity on the other side of the separator plate 315. The skilled person will understand that the height of features formed by pressing is limited by the material properties and thickness of the metal sheet. However, height of the pressed features in this case is relatively small (typically a maximum of 1mm) and so mechanical strength of the deformed metal sheet is not significantly reduced by the pressing.

Figs. 3B and 3C show the separator plate 315 of Fig. 3A in perspective and plan views. Fig. 3C also shows sections A-A, B-B, and C-C of the separator plate 315. In the Figures, the thickness (vertical) dimension and therefore a height of the dimpled protrusions is exaggerated for illustrative purposes.

A first plurality of first dimpled protrusions 330, 331, 332 extend outwardly ("up" in Fig. 3) from a mid-plane region of the separator plate 315 towards the cell layer 305 (the metal support plate thereof) of the cell unit 301a in which the separator plate is disposed. The outermost points of the first dimpled protrusions 330, 331, 332 contact the cell layer 305 of the cell unit 301a in which the separator plate is disposed. As a result, the first dimpled protrusions 330, 331, 332 (along with the spacer plate 310) define the first fluid volume between the cell layer 305 and (a first side of) the mid-plane region of the separator plate 315.

A second plurality of second dimpled protrusions 335, 336, 337 extend outwardly ("down" in Fig. 3) from the mid-plane region of the separator plate 315 (of cell unit 301a) towards the cell layer 305 of an adjacent cell unit 301b (i.e. a cell unit which is adjacent to the cell unit in which the separator plate 315 is disposed). In other words, the dimpled protrusions 330, 331, 332 extend outwardly from a first side of the separator plate and the dimpled protrusions 335, 336, 337 extend outwardly from a second side of the separator plate. The outermost points of the dimpled protrusions 335, 336, 337 contact the electrochemically active cell region 307 of the adjacent cell unit 301b. As a result, the dimpled protrusions 335, 336, 337 define a second fluid volume between (a second side of) the mid-plane of the separator plate 315 and the electrochemically active layer 307 of the adjacent cell unit 301b.

The mid-plane of the separator plate 315 varies in height across the active cell region 307, and the dimpled protrusions correspondingly vary in height (so that their outermost points form flat planes). Fig. 3 shows a mid-plane having three distinct heights in mid-plane sub-regions 340, 341, and 342, with steps between each mid-plane sub-region. In this case, each mid-plane sub-region is itself a flat plane. It will be understood that three distinct mid-plane heights are shown in Fig. 3 as a mere example, and there may be two or more than three mid-plane heights. Dimpled protrusions 330 protrude up from the first mid-plane sub-region 340. The dimpled protrusions 330 in the first mid-plane sub-region 340 extend outwardly from the separator plate 315 towards the cell layer 305 of the cell unit 301a in which the separator plate is disposed. The outermost points of the dimpled protrusions 330 define a plane which is parallel to and contacts the cell layer 305 (as a result, the dimpled protrusions 330 in first mid-plane sub-region 340 have a height which is the same as the thickness of the spacer plate 310). In this case, each mid-plane sub-region of the separator plate is a flat (non-curved) plane which is parallel to the cell layer 305. However, this need not necessarily be the case (e.g. Fig. 4).

The dimpled protrusions 335 protrude down from the first mid-plane sub-region 340. The dimpled protrusions 335 in the first mid-plane sub-region 340 extend outwardly from the separator plate 315 towards the cell layer 305 of a cell unit 301b adjacent to that containing the separator plate 305. The outermost points of the dimpled protrusions 335 define a plane which is parallel to and contacts (the electrochemically active cell region 307 of) the cell layer 305 of the adjacent cell unit 301b.

Dimpled protrusions 331 protrude up from the second mid-plane sub-region 341, and dimpled protrusions 336 protrude down from the second mid-plane sub-region 341. The second mid-plane sub-region 341 of the separator plate 315 is closer to the cell layer 305 of the cell unit in which the separator plate is disposed than the first mid-plane sub-region 340. Therefore, the dimpled protrusions 331 are shorter than the dimpled protrusions 330 (such that the outermost points of said protrusions 330, 331 lie in a flat plane parallel to the cell layer 305) and the dimpled protrusions 336 are taller than the dimpled protrusions 335 (such that the outermost points of said protrusions 335, 336 lie in a flat plane parallel to the cell layer 305).

Dimpled protrusions 332 protrude up from the third mid-plane sub-region 342, and dimpled protrusions 337 protrude down from the third mid-plane sub-region 342. The third mid-plane sub-region 342 of the separator plate 315 is closer to the cell layer 305 of the cell unit 301a in which the separator plate 315 is disposed than the second mid-plane sub-region 341 (and also closer than the first mid-plane sub-region 340). Therefore, the dimpled protrusions 332 are shorter than the dimpled protrusions 331 (such that the outermost points of said dimpled protrusions 330, 331, and 332 lie in a flat plane parallel to the cell layer 305) and the dimpled protrusions 337 are taller than the dimpled protrusions 336 (such that the outermost points of said dimpled protrusions 335, 336, and 337 lie in a flat plane parallel to the cell layer 305).

A varying height of the first fluid volume is defined between the mid-plane regions and the outermost point of the dimpled protrusions 330, 331, and 332. A varying height of the second fluid volume is defined between the mid-plane sub-regions and the outermost point of the dimpled protrusions 335, 336, and 337. The height of the first fluid volume is highest in first mid-plane sub-region 340, lower in second mid-plane sub-region 341, and lowest in third mid-plane sub-region 342. Correspondingly, as a result of the varying mid-plane being formed by pressing, the height of the second fluid volume is lowest in first mid-plane sub-region 340, higher in second mid-plane sub-region 341, and highest in third mid-plane sub-region 342. As can be seen in the sections A-A, B-B, and C-C, the sum of the first and second fluid volume heights is the same in each of the mid-plane sub-regions (first mid-plane sub-region 340, second mid-plane sub-region 341, and third mid-plane sub-region 342).

The variation of first fluid volume height is perpendicular to a line between the first fluid ports 316 (and hence perpendicular to the overall flow direction in the first fluid volume in this example (the overall flow direction in the second fluid volume may be similar to that of the first fluid volume, in which case the first and second fluids are in co-flow arrangement)). One of the fluid ports 316 is an inlet port, to supply first fluid to the first fluid volume, and the other of the fluid ports 316 is an outlet to exhaust first fluid from the first fluid volume. First fluid flows within the first fluid volume generally from the inlet to the outlet. The height of first fluid volume is lowest in third mid-plane sub-region 342. This provides a restriction (relative to the second and first mid-plane sub-regions 341 and 340, respectively) to flow of first fluid between the inlet and outlet ports 316, and ensures that a portion of first fluid is forced to follow the longer path from the inlet port to the outlet port across the second mid-plane sub-region 341. In a similar way, the second mid-plane sub-region 341 provides a restriction (to a lesser extent than the third mid-plane sub-region 342) which ensures that a second portion of first fluid is forced to follow the longer path from the inlet port to the outlet port across the first mid-plane sub-region 340. The variation of first fluid volume height therefore promotes an even distribution of first fluid across the entire area covered by the dimpled protrusions and the active cell region 307. The dimpled protrusions permit the first fluid to mix, and enable the mid-plane sub-regions to control the distribution of first fluid.

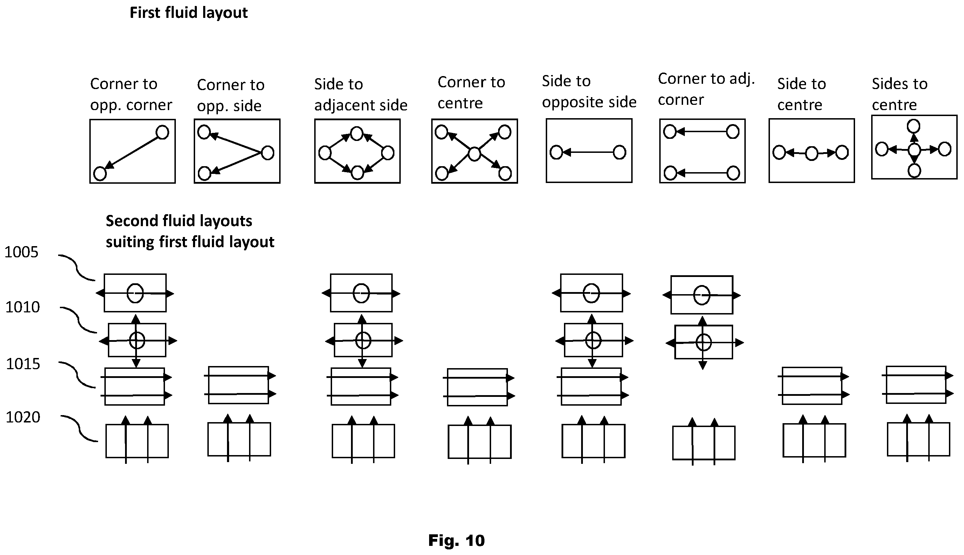

In the example of Fig. 3, no fluid ports are provided in the cell unit 301 for the second fluid. In this case the second fluid volume is externally manifolded; second fluid is provided to the second fluid volume by passageways that are located beyond the edges of the cell unit 301 shown in Fig. 3. The second fluid is supplied by at least one inlet passageway and exhausted by at least one outlet passageway. In some cases the second fluid inlet and outlet passageways are disposed to opposing edges of the cell unit 301 (e.g., Fig. 10, configurations 1015, 1020). In some cases, a fluid port (not shown in Fig. 3) for the second fluid is provided centrally within the plan view area of the cell unit, which may be an inlet port, in which case outlet externally manifolded passageways are provided to at least one pair of opposing cell edges (e.g., Fig. 10, configurations 1005, 1010).

The variation in height of the second fluid volume has an effect on the flow of second fluid in the second fluid volume. Similar to for the first fluid volume, a lower height for the second fluid volume causes a restriction relative to a larger height for the second fluid volume, and causes second fluid to flow preferentially towards the area with larger height.

In the example of Fig. 3, the first mid-plane sub-region 340 is positioned midway between the outermost points of the dimpled protrusions 330 and 335, but this need not be the case. The height of the first fluid volume may be less than the height of the second fluid volume. The first fluid volume may have a height which is between 30% and 80%, preferably between 40% and 60%, of a height of the second fluid volume.

For laminar flow between two plates spaced by height h, the maximum velocity (at a position mid-way between the two plates) is proportional to h². A similar relationship holds for flow rate between inlet and outlet ports: the flow rate is larger in parts of the volume which have a larger height, and the flow rate is smaller in parts of the volume which have a smaller height (in other words, for flow rate between inlet and outlet ports: the flow rate can be increased in a part of the volume by making that part of the volume have a larger height, and vice-versa the flow rate can be decreased in a part of the volume by making that part of the volume have a smaller height. For example, when the distance between the two plates varies in a direction perpendicular to a straight line between the two ports (for example the two ports of Fig. 3), the variation may be such that the flow rate along a direct flow path (or streamline) between the ports is the same (or similar to) the flow rate along a less direct flow path (or streamline). In other words, the variation may be such that the flow rate in the first fluid volume is the same through regions bounded by the first mid-plane sub-region 340, second mid-plane sub-region 341, and third mid-plane sub-region 342. Thus, the variation in mid-plane height allows for improved distribution of first fluid across the electrochemically active cell region.

In a preferred example, the first fluid is fuel and the second fluid is air or oxidant and the height of the first fluid volume is less than the height of the second fluid volume (for air or oxidant). In operation as a SOFC, fuel (in gaseous form) is typically provided at a greater pressure than oxidant (also in gaseous form), and the height of the fuel volume is lower than the height of the oxidant volume. As a result, the mid-plane variation (and so height variations in the respective volumes) has a greater effect on the fuel volume than the oxidant volume. For this reason, the variation in mid-plane height can be tailored for the first fluid (e.g. fuel) in preference over the second fluid (e.g. oxidant. For example, the present embodiment will help distribute (higher pressure) fuel to the outer edge regions of the cell (regions 340) which are furthest away from the (centrally located) ports (those being the hardest locations to deliver fuel to with a limited number of ports) and at the same time, promote/distribute more air flow to the central region of the cell 342, which is typically the hottest part of the cell, thereby providing more cooling and an improved cell thermal profile (i.e. smoother/flatter). Deforming the separator whereby the respective fluid volume heights are commensurately increased and reduced thus optimally exploits this inverse relationship/requirement.

The dimpled protrusions 330, 331, 332, 335, 336, and 337 in this example are circular in cross section. They do not direct the first and second fluids in any particular direction and so allow distribution of first and second fluid across the extent of the electrochemically active cell region 307. A flow path around the dimpled protrusions may therefore be described as tortuous. The dimpled protrusions are substantially frusto-conical in form in that they have non-perpendicular side walls and a truncated flat top (referred to as the outermost points, above). They may take cross sectional shapes other than circular, such as square, cross, or hexagonal, each of which do not control direction of fluid flow around themselves in the respective fluid volumes. They may take elongated shapes such as oval, rectangle, or non-regular polygon, having an aspect ratio which is less than 10, preferably less than 5, more preferably less than 2, such that they do not constrain flow in a particular direction. The dimpled protrusions are pressed into the plate of the separator plate 315. Such angled walls are a preferred arrangement as an angle is easier to achieve when pressing them out of the plate from which the separator plate 315 is formed than a perpendicular wall. However, any angle from perhaps 20 to 90 degrees can provide a useable form. Preferably it is between 40 and 90 degrees from the plane of the sheet from which it is pressed.

The step between each mid-plane sub-region is a discrete step, and, once again, may have angled (non-perpendicular) side walls, as shown in Fig. 3. Such angled walls are a preferred arrangement as an angle is easier to achieve when pressing them out of the plate from which the separator plate 315 is formed than a perpendicular wall. However, any angle from perhaps 20 to 90 degrees can provide a useable form. Preferably it is between 40 and 90 degrees from the plane of the sheet from which it is pressed.

Usually the upwardly projecting dimpled protrusions 330, 331, and 332 and the downwardly projecting dimpled protrusions 335, 336, and 337 are pressed in the same step as mid-plane sub-regions 340, 341, and 342 are pressed. The first mid-plane sub-region 340 may represent an undeformed area of a planar metal sheet from which the separator plate 315 is formed.

Compressive forces in the stack in the vicinity of the active cell region 307 are required for good electrical contact and hence good conductivity through the stack. Dimpled protrusions 330, 331, and 332 (towards a cell layer 305 the cell unit 301a in which the separator plate 315 is disposed) and dimpled protrusions 335, 336, and 337 (away from a cell layer 305 of the cell unit 301a in which the separator plate 315 is disposed, towards a cell layer 305 of a neighbouring cell unit 301b) create the required electrical contacts between cell units 301 in the stack and also provide a support function for the fuel cell unit in the central region. The dimpled protrusions alternate between up and down dimpled protrusions (towards and away a cell layer 305 of the cell unit 301a in which the separator plate is disposed) to transfer the compression force through the stack (to the cell layer of the cell unit in which the separator plate is disposed, and to the cell layer of a neighbouring cell unit). It will be understood that the dimpled protrusions need not strictly alternate between up and down directions, as long as there are sufficient dimpled protrusions in each direction to transfer the compression force thereby maintain the first and second fluid volumes without undue warping of the separator plate and cell layer.

Referring to Fig. 4A, an exploded view of a stack arrangement 400 having a separator plate 415 is shown. Fig. 4B shows the separator plate 415 in plan view and Fig. 4C shows the cross sections A-A, B-B, C-C, and D-D indicated in Fig. 4B. The cell units of Fig. 4 have a cell layer 405 and separator plate 415 with a side-to-side port arrangement similar to Fig. 3. However, the separator plate 415 of Fig. 4 is provided with flanged perimeter features 410, which obviate the need for the spacer plate 310 of Fig. 3. The flanged perimeter features 410 extend out of the first mid-plane 440 of the separator plate 415 towards the cell layer of the cell unit in which the separator plate is disposed, to create a concavity in the separator plate (and a convexity to the outside surface). The concavity forms the first fluid volume within the cell unit upon assembly of the cell unit. The flanged perimeter features 410 are shown in only the separator plate 415, but may equally be formed in the cell layer, or in both of the separator plate and the cell layer. The cell layer 405 and separator plate 415 are stacked upon one another and welded (fused together) around the flanged perimeter features 410 to form a single metal-supported repeat cell unit 401a with a first fluid volume in the middle defined by the space provided by the flanged perimeter features. Each of cell layer 405 and separator plate 415 is a self-supporting metal plate, which enables handling of the separate plates before they are welded or fused together. The metal components of the cell stack repeat layer 401a are in electrical contact with one another, with electron flow between them being primarily via the fuse/weld path, thereby avoiding surface-to-surface contact resistance losses.

The separator plate 415 is provided with formed port features 450, in the form of dimples surrounding the ports 316 and which extend towards the cell layer 405, and their outermost points form a flat plane with the outer surface of the flanged perimeter features 410. The formed port features are circular in cross section, have angled side walls, and a truncated flat top (similar to the dimpled protrusions). During compression of a stack of cell units, the outermost points (flat top) of the formed port features (and the flanged perimeter features 410) are brought into contact with the cell layer, thereby supporting compression of the cell stack and transmitting compression forces to the gaskets 320 to provide a fluidic seal between their surface and that of the abutting surface. First fluid is able to enter and exit the first fluid volume from the fluid ports via gaps between the formed port features 450.

Similar to separator plate 315 of Fig. 3, the separator plate 415 of Fig. 4 is provided with dimpled protrusions which extend toward and away from the cell layer 405 across an area corresponding to that of the active cell region 307. Dimpled protrusions 430 extend from a first region 440 of the separator plate 415 towards the cell layer 405 of the cell unit 401a in which the separator plate is disposed. The outermost points of the dimpled protrusions 430 form a flat plane which coincides with the outermost points of the formed port features 450 and the flanged perimeter feature 410 (when the flanged perimeter feature is formed in the separator plate, only. In any case, the height of the dimpled protrusions 430 is the same as the total height of the flanged perimeter features formed in the separator plate and/or cell layer).

Dimpled protrusions 435 extend from the first region 440 of the separator plate 415 towards the cell layer 405 of a neighbouring cell unit 401b (and extend away from the cell layer 405 of the cell unit 401a in which the separator plate is disposed). The outermost points of the dimpled protrusions 435 form a flat plane.

The mid-plane of the separator plate 415 varies in height across the active cell region 307. In this case, the variation of the height is gradual or smooth, instead of stepped, and forms a curved mid-plane. Fig. 4 shows the mid-plane gradually varying in height in the second region 443 of the separator plate. The mid-plane height gradually varies in a direction generally perpendicular to a straight line between the first fluid ports 316. The variation is such that the first fluid volume height is lower along a straight line between the first fluid ports 316 and gradually increases in height away from that straight line (sections A-A, B-B). Correspondingly, the variation is such that the second fluid volume height is higher along a straight line between the first fluid ports 316 and gradually decreases in height away from that straight line (sections A-A, B-B). The effect upon the first and second fluid flow paths through the respective first and second fluid volumes is similar to that described above with respect to Fig. 3.

As shown in Fig. 4, the gradual curvature of the mid-plane is only in the direction generally perpendicular to the line between the first fluid ports 316. There exists a step in the mid-plane in the direction parallel to said straight line at the beginning and end of the second mid-plane sub-region 443.

Dimpled protrusions 433 extend from the second mid-plane sub-region 443 towards the cell layer 405 of the cell unit 401a in which the separator plate is disposed. The outermost points of the dimpled protrusions 433 form a flat plane which coincides with the outermost points of the dimpled protrusions 430 in first mid-plane sub-region 440.

Dimpled protrusions 438 extend from the second mid-plane sub-region 443 of the separator plate 415 towards the cell layer 405 of a neighbouring cell unit 401b (and extend away from the cell layer 405 of the cell unit 401a in which the separator plate is disposed). The outermost points of the dimpled protrusions 438 form a flat plane which coincides with the outermost points of the dimpled protrusions 435 in first mid-plane sub-region 440.

Fig. 4 also shows an active cell region 307 in which the electrochemically active cell region is wrapped around the fluid ports 306 to increase the proportion of the cell unit area that is electrochemically active and thereby increase a power density of the stack of cell units. In other words, in the vicinity of the ports, the edge of the active cell region is shaped to match the shape of the port; in this case the port is circular and so the edge of the active cell region forms a part-circle which is concentric with the port. The edge of the active cell region 307 is spaced from the edge of the port to allow space for the formed port features 450 and the gaskets 320, disposed around the port.

As with the features provided in separator plate 315, the features provided in the separator plate 415 are formed by pressing. Each of the dimpled protrusions 430, 433, 435, and 458, varying mid-plane sub-region 440, 443, formed port features 450 and flanged perimeter features 410 may be formed from a planar sheet by one or more pressing steps.

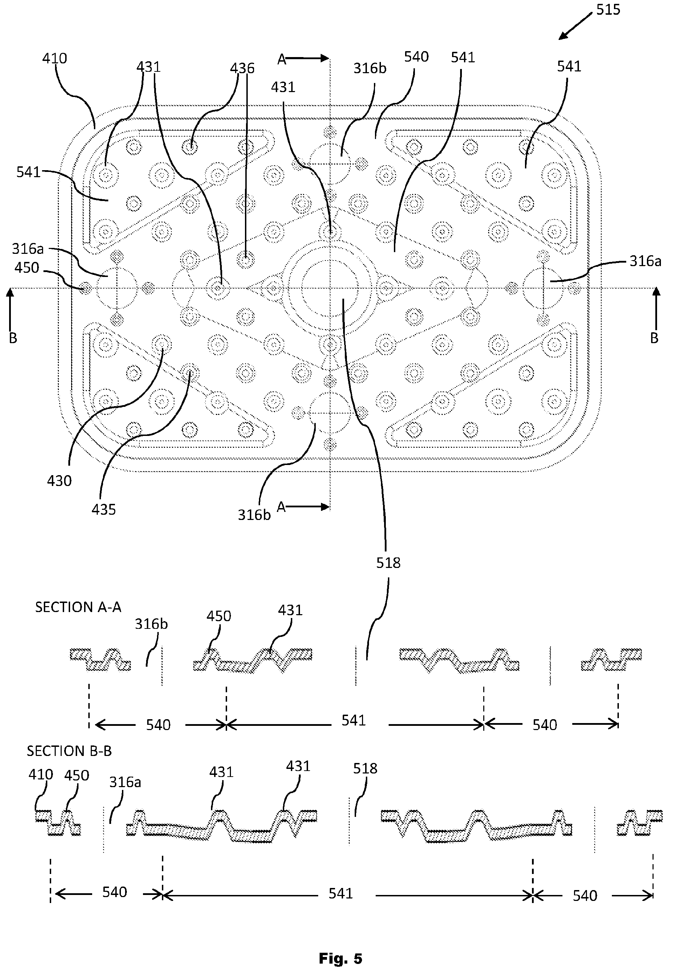

Fig. 5 shows a plan view of an example separator plate 515 and cross sections A-A and B-B indicated therein. The separator plate 515 is similar to the separator plates previously described, but is provided with four ports 316a, 316b for first fluid and a single port 518 for second fluid. It will be understood that a cell layer for use with the separator plate 515 is provided with corresponding four ports for first fluid and a single port for second fluid. Preferably, the first fluid is fuel and the second fluid is oxidant.

Two first fluid ports 316a are positioned mid-way along the width of the separator plate 515, and towards opposing short edges of the separator plate. Two first fluid ports 316b are positioned mid-way along the length of the separator plate 515, and towards opposing long edges of the separator plate. Either the two first fluid ports 316a are inlet ports and the two first fluid ports 316b are outlet (exhaust) ports, or the two first fluid ports 316a are outlet (exhaust) ports and the two first fluid ports 316b are inlet ports. The first fluid ports 316a, 316b deliver and exhaust first fluid to and from the first fluid volume which is enclosed between the separator plate 515 and a cell layer. First fluid in the first fluid volume therefore flows from an inlet port (one of 316a, 316b) to an outlet port (the other of 316a, 316b). Each of the first fluid ports 316 are provided with formed port features 450, similar to those described above.

The second fluid port 518 is positioned mid-way along the length and width of the separator plate 515 (i.e. it is central within the separator plate 515). Surrounding the second fluid port is a flange which is configured to contact the cell layer (of the same cell unit as the separator plate 515 belongs). In manufacture of a cell unit, a fluidic seal is formed between the flange and the cell layer (for instance by welding around the flange).

The second fluid port 518 is used for delivery or exhaust of second fluid to or from the second fluid volume between the separator plate 515 of a cell unit and the cell layer of an adjacent cell unit. The second fluid volume is also externally manifolded (in a similar manner to that described previously). Preferably, the second fluid port 518 is an inlet port for delivery of second fluid to the second fluid volume, and exhaust from the second fluid volume is externally manifolded, for example at two opposing edges of the separator plate 515.

The mid-plane of the separator plate 515 of a cell unit varies in its height across the active cell region. i.e., the distance between the mid-plane of the separator plate 515 and the cell layer of the cell unit in which the separator plate is disposed varies. In this case, the variation of the height is stepped, in a similar manner to separator plate 315. The mid-plane height varies in a direction generally perpendicular to a straight line between the first fluid ports that act as an inlet and the first fluid ports that act as an outlet. The variation is such that the first fluid volume height is lower along a straight line between the inlet and outlet first fluid ports 316a and 316b, and increases in height away from that straight line. Correspondingly, the variation is such that the second fluid volume height is higher along a straight line between the inlet and outlet first fluid ports 316a and 316b and decreases in height away from that straight line. The effect upon the first and second fluid flow paths through the respective first and second fluid volumes is similar to that described above with respect to Figs. 3 and 4.

Two different mid-plane sub-regions are illustrated in Fig. 5. A first mid-plane sub-region 540 is disposed along the straight lines between the inlet and outlet first fluid ports 316a, 316b. A second mid-plane sub-region 541 is disposed towards the corners and centre of the separator plate 515. The first mid-plane sub-region 540 is closer to the cell layer of the cell unit in which the separator plate is disposed than the second mid-plane sub-region 541. As a result, the height of the first fluid volume is greater in the second mid-plane sub-region 541 than the first mid-plane sub-region 540, and first fluid is encouraged to distribute across the first and second mid-plane sub-regions.

Dimpled protrusions 430 extend from the first mid-plane sub-region 540 of the separator plate 515 towards the cell layer of the cell unit in which the separator plate is disposed. The outermost points of the dimpled protrusions 430 form a flat plane which coincides with the outermost points of the formed port features 450 and the flanged perimeter feature 410 (when the flanged perimeter feature is formed only in the separator plate. In cases where the flanged perimeter features are formed at least in part in the cell layer, the height of the dimpled protrusions 430 is the same as the total height of the flanged perimeter features).

Dimpled protrusions 435 extend from the first mid-plane sub-region 540 of the separator plate 515 towards the cell layer of a neighbouring cell unit (and extend away from the cell layer of the cell unit in which the separator plate is disposed). The outermost points of the dimpled protrusions 435 form a flat plane.

Dimpled protrusions 431 extend from the second mid-plane sub-region 541 of the separator plate 515 towards the cell layer of the cell unit in which the separator plate is disposed. The outermost points of the dimpled protrusions 431 form a flat plane which coincides with the outermost points of the dimpled protrusions 430 in first mid-plane sub-region 540.

Dimpled protrusions 436 extend from the second mid-plane sub-region 541 of the separator plate 515 towards the cell layer of a neighbouring cell unit (and extend away from the cell layer of the cell unit in which the separator plate is disposed). The outermost points of the dimpled protrusions 436 form a flat plane which coincides with the outermost points of the dimpled protrusions 435 in first mid-plane sub-region 540.

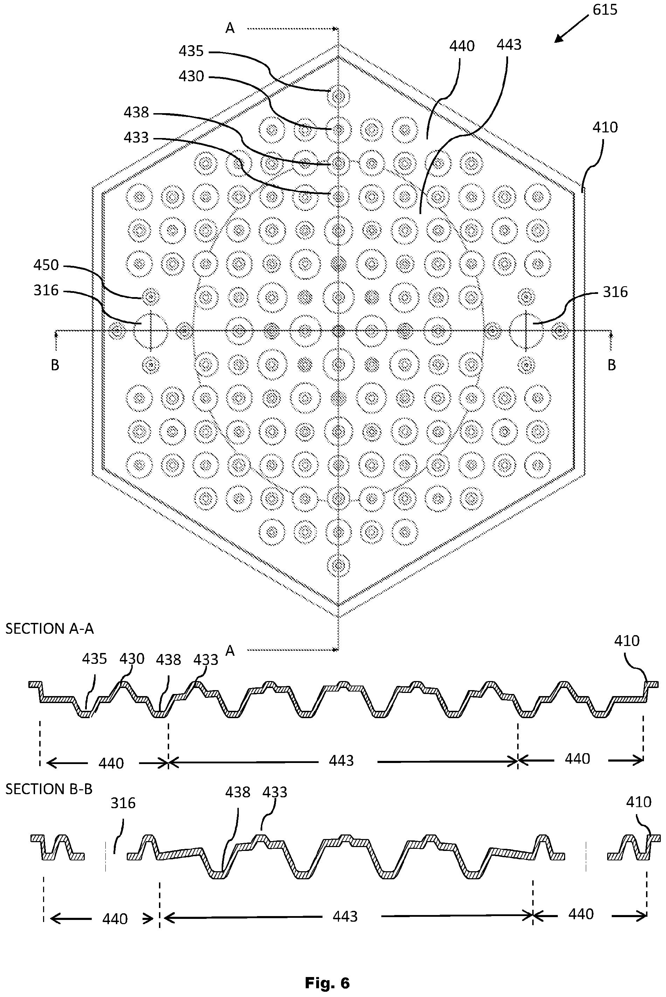

Fig. 6 shows a plan view of an example separator plate 615 and cross sections A-A and B-B indicated therein. The separator plate 615 is similar to the separator plates previously described, in particular that of Fig. 4, but the separator plate has a hexagonal shape rather than a rectangular shape. It will be understood that a cell layer for use with the separator plate 615 is correspondingly hexagonal in shape. In this case the cell layer is an electrolyte-supported polymer electrolyte membrane (PEM). The separator plate 615 is provided with first fluid ports 316 (one of which is an inlet to, the other is an outlet from the first fluid volume), formed port features 450 and flanged perimeter features 410 as previously described. It will be understood that the varying mid-plane may be used with cell units having plan-view shapes other than rectangular and hexagonal, for example circular, triangular, square, and polygons of higher number of sides.

The mid-plane of the separator plate 615 varies in its height across the active cell region. i.e., the distance between the mid-plane of the separator plate 615 and the cell layer of the cell unit in which the separator plate is disposed varies. In this case, the variation of the height is gradual, in a similar manner to separator plate 415. The mid-plane height varies in a direction generally perpendicular to a straight line between the first fluid port that acts as an inlet and the first fluid port that acts as an outlet. The variation is such that the first fluid volume height is lower along a straight line between the inlet and outlet first fluid ports 316, and increases in height away from that straight line. Correspondingly, the variation is such that the second fluid volume height is higher along a straight line between the inlet and outlet first fluid ports 316 and decreases in height away from that straight line. The effect upon the first and second fluid flow paths through the respective first and second fluid volumes is similar to that described above with respect to Figs. 3 to 5.

Two different mid-plane sub-regions are illustrated in Fig. 6. A first mid-plane sub-region 440 is disposed towards the edges of the separator plate. A second mid-plane sub-region 443 is disposed towards the centre of the separator plate 615. The second mid-plane sub-region 443 is a curved plane, similar to that of Fig. 4. The second mid-plane sub-region 443 is closer to the cell layer of the cell unit in which the separator plate 615 is disposed than the first mid-plane sub-region 440. The curvature of the second mid-plane sub-region 443 is such that the distance between the mid-plane of the separator plate 615 and the cell layer gradually increases away from the centre of the separator plate 615. As a result, the height of the first fluid volume is greater in the first mid-plane sub-region 440 than in the second mid-plane sub-region 443, and first fluid is encouraged to distribute across the first and second mid-plane sub-regions.

Dimpled protrusions 430 extend from the first mid-plane sub-region 440 of the separator plate 615 towards the cell layer of the cell unit in which the separator plate is disposed. The outermost points of the dimpled protrusions 430 form a flat plane which coincides with the outermost points of the formed port features 450 and the flanged perimeter feature 410 (when the flanged perimeter feature is formed in the separator plate, only. In any case, the height of the dimpled protrusions 430 is the same as the total height of the flanged perimeter features formed in the separator plate and/or cell layer).

Dimpled protrusions 435 extend from the first mid-plane sub-region 440 of the separator plate 615 towards the cell layer of a neighbouring cell unit (and extend away from the cell layer of the cell unit in which the separator plate is disposed). The outermost points of the dimpled protrusions 435 form a flat plane.

Dimpled protrusions 433 extend from the second mid-plane sub-region 443 of the separator plate 615 towards the cell layer of the cell unit in which the separator plate is disposed. The outermost points of the dimpled protrusions 433 form a flat plane which coincides with the outermost points of the dimpled protrusions 430 in first mid-plane sub-region 440.

Dimpled protrusions 438 extend from the second mid-plane sub-region 443 of the separator plate 615 towards the cell layer of a neighbouring cell unit (and extend away from the cell layer of the cell unit in which the separator plate is disposed). The outermost points of the dimpled protrusions 438 form a flat plane which coincides with the outermost points of the dimpled protrusions 435 in first mid-plane sub-region 440.

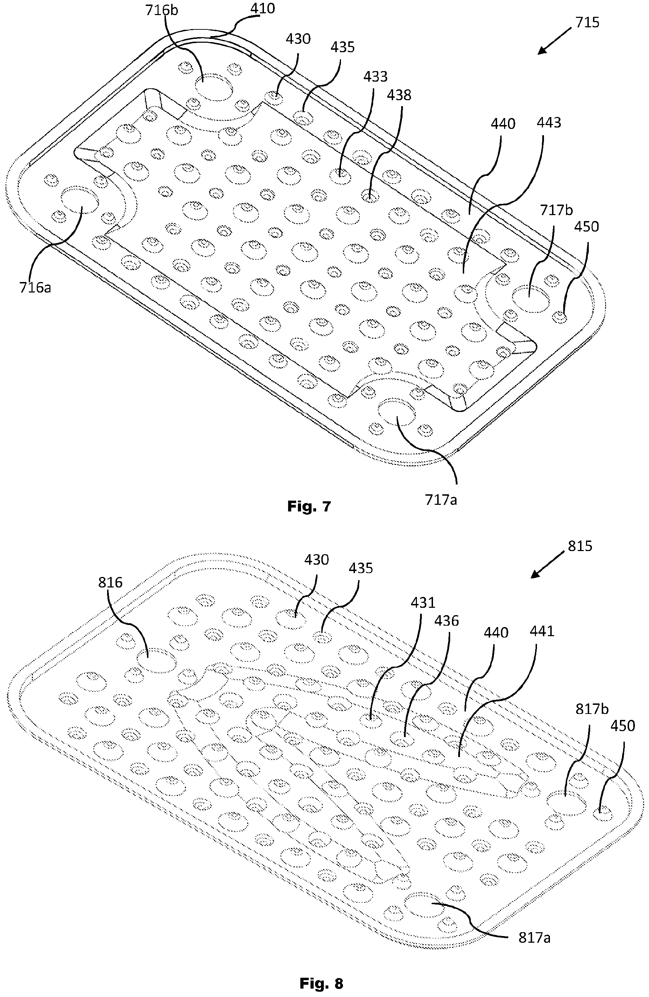

Fig. 7 shows a perspective view of an example separator plate 715. The separator plate 715 is similar to the separator plates previously described, in particular that of Fig. 4, but the separator plate 715 has four first fluid ports. It will be understood that a cell layer for use with the separator plate 715 is provided with corresponding first fluid ports. In this case the cell layer comprises an electrochemically active region supported by (or deposited on and supported by) an inherently porous metal support plate (rather than a drilled non-porous metal substrate). Such porous metal support plates may be produced by tape casting and sintering. The separator plate 715 is provided with formed port features 450 surrounding the ports and flanged perimeter features 410 as previously described.

Separator plate 715 is provided with four first fluid ports 716, 717, each port being disposed towards a respective corner of the separator plate 715. Each of the fluid ports 716, 717 is in fluid communication with the first fluid volume (between the separator plate 715 and the cell layer of the cell unit in which the separator plate is disposed). The two fluid ports 716 are positioned at corners of the separator plate 715 that share an edge of the separator plate 715, and the two fluid ports 717 are positioned at corners of the separator plate 715 that share an opposite edge of the separator plate 715. The two fluid ports 716 are inlets to the first fluid volume and the two fluid ports 717 are outlets from the first fluid volume. Thus, first fluid is introduced to the first fluid volume by fluid ports 716 and exhausted from the first fluid volume by fluid ports 717.

The mid-plane of the separator plate 715 varies in its height across the active cell region. i.e., the distance between the mid-plane of the separator plate 715 and the cell layer of the cell unit in which the separator plate is disposed varies. In this case, the variation of the height is gradual, in a similar manner to separator plate 415. The mid-plane height varies in a direction generally perpendicular to the direction of first fluid flow in the first fluid volume between the first fluid ports 716 that act as an inlet and the first fluid ports 717 that act as an outlet. The mid-plane height is larger along a line from a position midway between the two inlet ports 716a, 716b to a position midway between the two outlet ports 717a, 717b than between ports 716a and 717a (and similarly than between ports 716b and 717b). Correspondingly, the variation is such that the second fluid volume height is higher along a straight line between the inlet and outlet first fluid ports 716a and 717b (and similarly between 716b and 717b) and decreases in height away from that straight line towards a line from a position midway between the two inlet ports 716a, 716b to a position midway between the two outlet ports 717a, 717b. The effect upon the first and second fluid flow paths through the respective first and second fluid volumes is similar to that described above with respect to Figs. 3 to 6.

Two different mid-plane sub-regions are illustrated in Fig. 7. A first mid-plane sub-region 440 is disposed towards the two opposing edges of the separator plate (the edges that are between ports 716a,717a, and between 716b,717b - i.e. the long edges in this case). A second mid-plane sub-region 443 is disposed towards the centre of the separator plate 615. The second mid-plane sub-region is a curved plane, similar to that of Figs. 4 and 6. Dimpled protrusions 430, 435 are provided in the first mid-plane sub-region 440 and dimpled protrusions 433, 438 are provided in the second mid-plane sub-region, similar to those previously described.

Fig. 8 shows a perspective view of an example separator plate 815. The separator plate 815 is similar to the separator plates previously described, in particular that of Fig. 4, but the separator plate 815 has three first fluid ports. It will be understood that a cell layer for use with the separator plate 815 is provided with corresponding first fluid ports. The separator plate 815 is provided with formed port features 450 surrounding the ports and flanged perimeter features 410 as previously described.

Separator plate 815 is provided with three first fluid ports 816, 817. The first fluid port 816 is disposed towards a first short edge and midway along that edge of the separator plate 815. Two first fluid ports 817a, 817b are disposed towards respective corners of the separator plate 815 along a second edge opposing the first edge. Each of the fluid ports 816, 817 is in fluid communication with the first fluid volume (between the separator plate 815 and the cell layer of the cell unit in which the separator plate is disposed). The first fluid port 816 may be an inlet port and the two first fluid ports 817 may be outlet ports. Thus, first fluid is introduced to the first fluid volume by fluid port 816 and flows through the first fluid volume to be exhausted from the first fluid volume by the two fluid ports 817. Alternatively, first fluid port 816 may be an outlet port and the two first fluid ports 817 may be inlet ports. Thus, first fluid is introduced to the first fluid volume by the two fluid ports 817 and flows through the first fluid volume to be exhausted from the first fluid volume by the fluid port 816.

The mid-plane of the separator plate 815 varies in its height across the active cell region. i.e., the distance between the mid-plane of the separator plate 815 and the cell layer of the cell unit in which the separator plate is disposed varies. In this case, the variation of the height is stepped, in a similar manner to separator plate 315. The mid-plane height varies in a direction generally perpendicular to the direction of first fluid flow in the first fluid volume between the first fluid ports 816 that act as an inlet (outlet) and the first fluid ports 817 that act as an outlet (inlet). The mid-plane height (and therefore first fluid volume height) is smaller along straight lines between the ports 816 and 817a and between the ports 816 and 817b than elsewhere across the separator plate. The second fluid volume height varies correspondingly. The effect upon the first and second fluid flow paths through the respective first and second fluid volumes is similar to that described above with respect to Figs. 3 to 7.

Two different mid-plane sub-regions are illustrated in Fig. 8. A second mid-plane sub-region 441 is disposed along straight lines between the ports 816 and 817a and between the ports 816 and 817b. A first mid-plane sub-region 440 is disposed elsewhere across the separator plate 815. Dimpled protrusions 430, 435 are provided in the first mid-plane sub-region 440 and dimpled protrusions 431, 436 are provided in the second mid-plane sub-region 441, similar to those previously described.

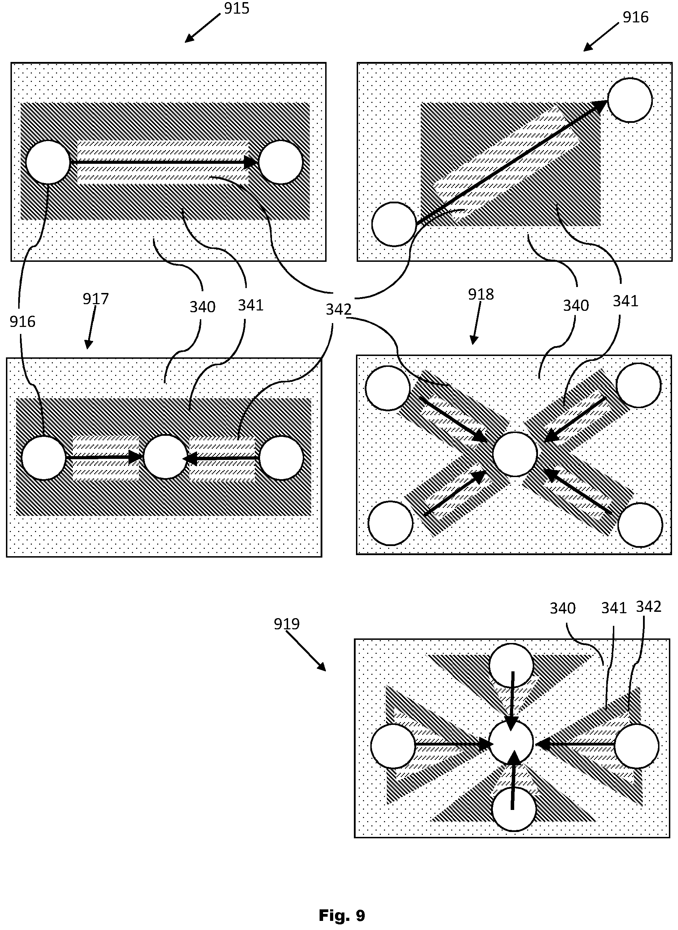

Fig. 9 shows schematic plan views of further example separator plates 915, 916, 917, 918, and 919. The separator plates 915, 916, 917, 918, and 919 exemplify further first fluid port arrangements that may be used along with corresponding varying mid-plane height of the separator plates 915, 916, 917, 918, and 919. In each case, a relatively large mid-plane height (large height to the first fluid volume) is represented by the dotted area 340, an intermediate mid-plane height (intermediate height to the first fluid volume) is represented by the hashed area 341, and a low mid-plane height (low height to the first fluid volume) is represented by the dashed area 342. In each case, the mid-plane height may vary in a stepped or gradual manner as described above. In each case, first fluid ports in fluid communication with the first fluid volume are represented by circles 916. Predominant flow directions are indicated by the arrows, which also serve to indicate which ports 916 are inlet ports and which ports are outlet ports. It will be understood that the flow direction across a separator plate may also be taken to be opposite that indicated by the arrows by swapping the inlet and outlet ports. It will be noted that separator plate 915 is similar to separator plates 315 and 415 for illustrative purposes. It will also be noted that each of the configurations of ports illustrated in Fig. 9 (and indeed in Figs. 7 and 8) may be applied to separator plates having a different plan view shape, such as circular, triangular, square, hexagonal (for example Fig. 6), or other polygonal shape.

Fig. 10 shows schematic plan views of preferred layout of ports (shown as circles) in a separator and external manifolding (where used) for the first and second fluids. For clarity of the figure, any second fluid ports are not shown in views of the first fluid port layout and vice-versa. The arrows show general fluid flow direction of the first and second fluids, and therefore also indicate whether each port is an inlet or outlet port. It will be understood that the flow direction across a separator plate may also be taken to be opposite that indicated by the arrows by swapping the inlet and outlet ports. It will be understood that the mid-plane height of the separator plates varies, as discussed above, to promote even distribution of the first fluid across the separator plate as discussed above, and therefor that the arrows are a simplification of the first fluid flow paths.

For example, the side to opposite side layout for the first fluid ports (similar to Figs. 3 and 4) may be preferably accompanied by any one of the second fluid layouts 1005, 1010, 1015, and 1020. Second fluid layouts 1005 and 1010 comprise a central port for the second fluid (similar to Fig. 5), that second fluid may be externally manifolded at one (1005) or two (1010) opposing pairs of edges of the separator. Second fluid layouts 1015 and 1020 comprise fully external manifolding of the second fluid, and flow from an edge to an opposing edge of the separator. Depending upon the second fluid layout, and the choice of ports as inlet and outlet, it will be seen that various flow regimes may be selected in the side to opposite side layout for the first fluid ports: for example counter-flow (where the first and second fluids generally flow in opposite directions) using second fluid layout 1015; co-flow (where the first and second fluids generally flow in a same direction) using second fluid layout 1015 (with the arrows therein reversed); and cross-flow (where first and second fluids generally flow at 90 degrees to one another) using second fluid layout 1020.

In another example, second fluid layouts 1015 and 1020 are preferable for use with the corner to opposite side corner first fluid layout (described with reference to Fig. 8, above).

The preferred layouts for the second fluid (for a given first fluid layout) are preferred for at least one of thermal management and symmetry across the cell unit.

The first and second fluids are typically fuel and oxidant, respectively; the fuel is typically provided at a higher pressure. Layouts which lead to a higher second (oxidant) fluid volume towards the centre of the separator plate (or which have a central port for inlet of the second(oxidant) fluid) may be preferred as these arrangements improve cooling, by the second fluid, of the hotter central part of the cell unit when operated as an SOFC.

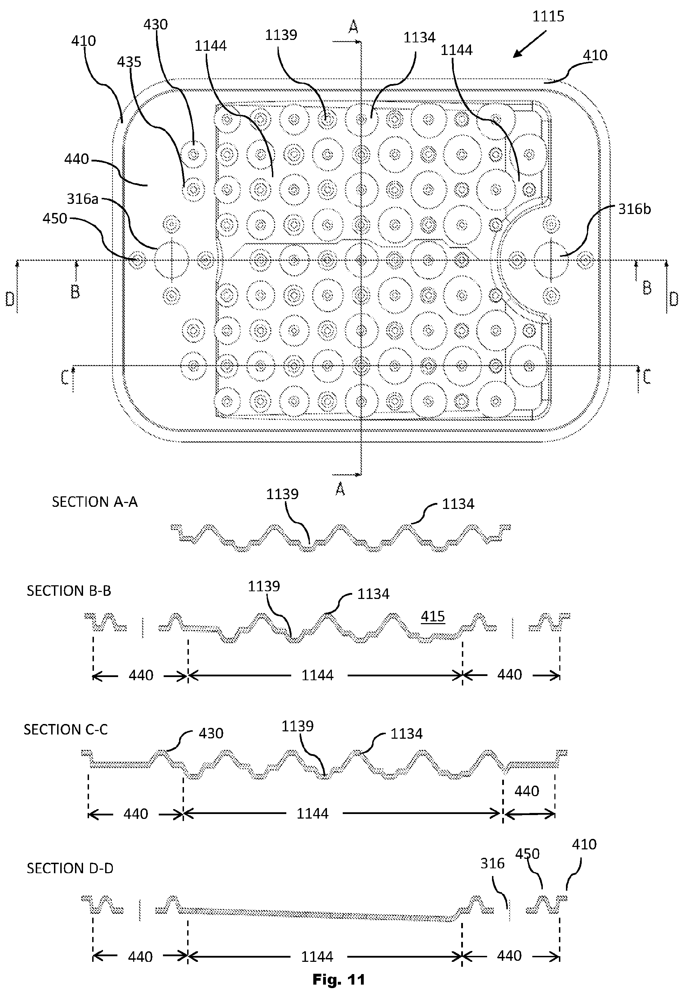

Fig. 11 shows a plan view of an example separator plate 1115 and cross sections A-A, B-B, C-C, and D-D indicated therein. The separator plate 1115 is similar to the separator plates previously described, in particular that of Fig. 4, but the mid-plane of the separator plate 1115 varies in its height across the active cell region in a direction which is generally parallel to a straight line between the inlet to and outlet from the first fluid volume.

The separator plate 1115 is provided with first fluid ports 316 (one of which is an inlet to, the other is an outlet from the first fluid volume), formed port features 450 and flanged perimeter features 410 as previously described. It will be understood that the varying mid-plane may be used with cell units having plan-view shapes other than rectangular for example circular, triangular, square, hexagonal and polygons of higher number of sides.

The mid-plane of the separator plate 1115 varies in its height across the active cell region. i.e., the distance between the mid-plane of the separator plate 1115 and the cell layer of the cell unit in which the separator plate is disposed varies. In this case, the variation of the height is gradual, in a similar manner to separator plate 415. The mid-plane height varies in a direction generally parallel to a straight line between the first fluid port that acts as an inlet and the first fluid port that acts as an outlet. The variation is such that the first fluid volume height is lower near first fluid port 316a and increases to a maximum near to the first fluid port 316b. The mid-plane has the same height around each of the first fluid ports 316 such the same type of gasket may be used around each of the first fluid ports 316. This means that a step in the mid-plane exists between the part of the mid-plane providing the maximum height of the first fluid volume 415 and the nearby first fluid port 316b. Correspondingly, the variation is such that the second fluid volume height is larger near first fluid port 316a and decreases to a minimum near to the first fluid port 316b.

Two different mid-plane sub-regions are illustrated in Fig. 11. A first mid-plane sub-region 440 is disposed towards the edges of the separator plate. A second mid-plane sub-region 1144 is disposed towards the centre of the separator plate 1115. The second mid-plane sub-region 1144 is an inclined plane. Near to the first fluid port 316a, the second mid-plane sub-region 1144 is the same distance away from the cell layer of the cell unit in which the separator plate 1115 is the first mid-plane sub-region 440. The inclination of the second mid-plane sub-region 1144 is such that the distance between the mid-plane of the separator plate 1115 and the cell layer gradually increases away from the first fluid port 1143 of the separator plate 1115. As a result, the height of the first fluid volume is greater in the second mid-plane sub-region 1144 than in the first mid-plane sub-region 440. The second mid-plane sub-region 1144 is illustrated in Fig. 11 as an inclined plane, in other words the height of the mid-plane region varies as a continuous transition. The second mid-plane sub region may instead be realised as a plurality of stepped sub-regions, in which case the height of the mid-plane region varies as a corresponding number of discontinuous transitions similar to those described with reference to Fig. 3.

Dimpled protrusions 430 extend from the first mid-plane sub-region 440 of the separator plate 1115 towards the cell layer of the cell unit in which the separator plate is disposed. The outermost points of the dimpled protrusions 430 form a flat plane which coincides with the outermost points of the formed port features 450 and the flanged perimeter feature 410 (when the flanged perimeter feature is formed in the separator plate, only. In any case, the height of the dimpled protrusions 430 is the same as the total height of the flanged perimeter features formed in the separator plate and/or cell layer).

Dimpled protrusions 435 extend from the first mid-plane sub-region 440 of the separator plate 1115 towards the cell layer of a neighbouring cell unit (and extend away from the cell layer of the cell unit in which the separator plate is disposed). The outermost points of the dimpled protrusions 435 form a flat plane.

Dimpled protrusions 1134 extend from the second mid-plane sub-region 1144 of the separator plate 1115 towards the cell layer of the cell unit in which the separator plate is disposed. The outermost points of the dimpled protrusions 1134 form a flat plane which coincides with the outermost points of the dimpled protrusions 430 in first mid-plane sub-region 440.

Dimpled protrusions 1139 extend from the second mid-plane sub-region 1144 of the separator plate 1115 towards the cell layer of a neighbouring cell unit (and extend away from the cell layer of the cell unit in which the separator plate is disposed). The outermost points of the dimpled protrusions 1139 form a flat plane which coincides with the outermost points of the dimpled protrusions 435 in first mid-plane sub-region 440.

Typically, the separator plate 1115 of Fig. 11 may be used such that the first fluid port 316a is an outlet from the first fluid volume and the first fluid port 316b is an inlet to the first fluid volume such that first fluid within the first fluid volume experiences a relatively high volume near the inlet and a relatively low volume near the outlet. This may improve utilisation of said first fluid by the electrochemically active cell region 307.

In an example the first fluid volume may be configured for fuel and the second fluid volume may be configured for oxidant. In operation as a fuel cell, and with first fluid port 316a as an inlet to and first fluid port 316b as an outlet from the first fluid volume, fuel utilisation may be increased by the variation in the midplane (decreasing height of first fluid volume from the inlet to the outlet). Meanwhile, the second fluid volume may be configured such that second fluid therein (e.g. oxidant) flows in the same direction as the first fluid. This may be referred to as co-flow. In such a co-flow arrangement, the height of the second fluid volume increases along the second fluid flow path, thereby improving cooling of the cell unit. Typically, when used as a fuel cell in this way, the height of the first fluid volume may be greater than the height of the second fluid volume across the entire cell area.

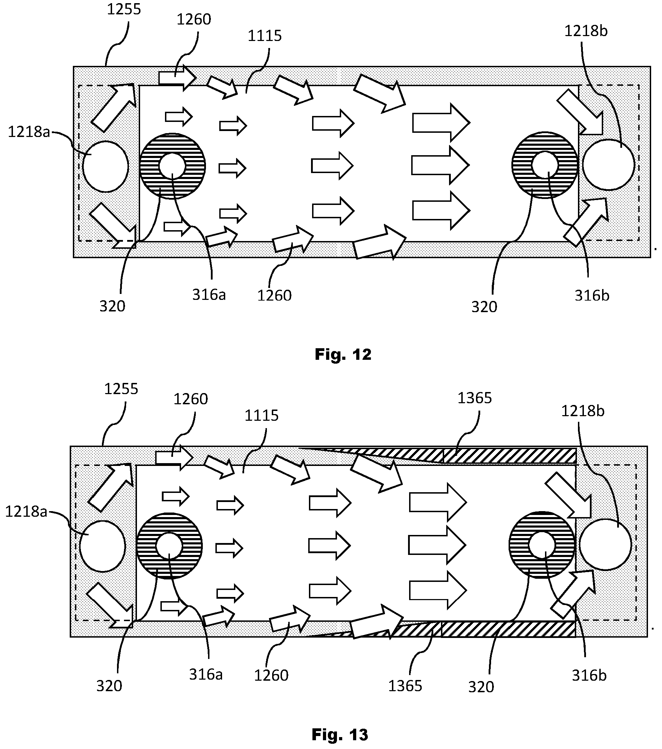

Fig. 12 is a sectional plan view of a stack of cell units, the cell units within that stack having a similar configuration to those described with reference to Fig. 11. The section shown in Fig. 12 is one through the second fluid volume. For sake of clarity, the dimples or electrochemically active cell region are not shown. The plan-view footprint of the stack of cell units is represented by the outline of separator plate 1115. As previously described, gaskets 320 surround the first fluid ports 316. Those gaskets separate the first and second fluid volumes, and form part of the internal manifold or chimney through the stack of cell units, through which a first fluid may be delivered to, and exhausted from, the first fluid volume of the cell units.The stack of cell units is positioned within an enclosure 1255, which provides a boundary to enclose the second fluid volume. There is a gap between the stack of cell units and the enclosure 1255.

An inlet to 1218a, and an outlet from 1218b, the second fluid volume are configured to deliver and exhaust second fluid from the second fluid volume. The second fluid volume may be externally manifolded, in which case the cell units do not have fluid ports for delivery and/or exhaust of second fluid, or they can be internally manifolded, in which case the inlet to 1218a, and outlet from 1218b, the second fluid volume are provided in each cell unit (and the footprint of the cell units, represented by 1115, includes the dashed region of Fig. 12).

In this example, each separator plate 1115 has an inlet to 316b, and an outlet from 316a, the first first fluid volume to the fluid volume. Correspondingly, the height of the second fluid volume is configured to increase from the inlet to 1218a the second fluid volume to the outlet from 1218b the second fluid volume.

In use, and because the height of the second fluid volume is relatively low near the inlet to the second fluid volume, the gap between the footprint of the cell units/stack (represented by 1115 in Fig. 12) and the enclosure 1255 provides a bypass for a portion of the second fluid delivered by the inlet 1218a to the second fluid volume. As the height of the second fluid volume generally increases towards the outlet 1218b from the second fluid volume, second fluid is drawn from the gap in to the portion of the second fluid volume within the footprint of the cell units/stack (represented by 1115 in Fig. 12). This flow of second fluid within the second fluid volume is represented by arrows 1260.

In this example, the first fluid volume may be for fuel and the second fluid volume may be for oxidant, and the cell units operated as fuel cell units. The decreasing height of the first fluid volume along the first fluid volume flowpath may increase fuel utilisation. Meanwhile, the increasing height of the second fluid volume along the second fluid volume flowpath (and, as a by-product, the bypass) increases flow rate of the second fluid in relatively hotter areas of the stack (because of the co-flow of fuel and oxidant) thereby improving cooling and increasing fuel cell performance.

Fig. 13 shows a variant of the stack cell units described with reference to Fig. 12. The variant of Fig. 13 additionally includes baffles 1365 which reduce or eliminate the gap between the footprint of the stack of cell units (represented by 1115) and the enclosure 1255. The baffles 1365 add to the bypass effect described with reference to Fig. 12, by forcing more or all of the second fluid into the portion of the second fluid volume within the footprint of the cell units/stack (represented by 1115 in Fig. 13). The baffles may be formed of an insulating material, such as mica, and a pair of baffles may extend through the height of the enclosure (i.e. in the stacking direction), that pair being separate components to the stack and the enclosure.

The separator plates described above may be manufactured by: providing a planar metal sheet and deforming the metal sheet to provide a three dimensional (3D) region. The deforming may be by pressing or forming as previously described. The three dimensional (3D) region includes at least: a first plurality of outwardly extending dimpled protrusions that define the height of a first fluid volume on a first side of the separator plate; a second plurality of outwardly extending dimpled protrusions that define the height of a second fluid volume on a second side of the separator plate; whereby a mid-plane sub-region is disposed between the protrusions; and, the mid-plane sub-region is so shaped as selectively to vary its height in at least one direction across the active cell region such that the interrelated respective heights of the first and second fluid volumes are correspondingly increased and decreased as a result.

Shaped port features, flanged perimeter features and/or other shaped flow control features, as described previously, may conveniently be formed in the separator plate in the same step in which the mid-plane region and protrusions are formed.

An electrochemical cell unit may be manufactured by providing a cell layer comprising a metal support plate carrying, on a first side thereof, an electrochemically active cell region and adjoining the metal support plate and a separator plate such that the three dimensional (3D) region of the separator plate overlies the cell layer. The adjoining may be by welding the metal support plate and the separator plate together around their periphery. In manufacturing the cell unit, the first plurality of dimpled protrusions typically contact the metal support plate (of the cell layer) of the cell unit. In manufacturing the cell unit, the peripheries of the cell layer and separator plate, and any fluid ports provided therein, are typically brought into alignment.

A stack of electrochemical cell units may be manufactured by stacking a plurality of electrochemical cell units such that: the first side of the separator plate of a first electrochemical cell unit faces the cell layer of the first electrochemical cell unit and encloses the first fluid volume therebetween, and the second side of the separator plate of the first electrochemical cell unit faces a cell layer of a second, neighbouring, electrochemical cell unit in the stack of cell units and encloses the second fluid volume therebetween. In manufacturing the stack of cell units, the second plurality of dimpled protrusions of the first electrochemical cell unit are typically brought into contact with the cell layer (usually the electrochemically active cell region on the metal support plate) of the second, neighbouring, electrochemical cell unit. In manufacturing the stack of cell units, the peripheries of the cell units, and any fluid ports provided therein, are typically brought into alignment. Aligned fluid ports form fluid passageways for supply and exhaust of a fluid volume. In a subsequent step, the stack may be encased in a vessel, and external fluid passageways provided.

The present invention is not limited to the above examples only, and other examples will be readily apparent to one of ordinary skill in the art without departing from the scope of the appended claims.

These and other features of the present invention have been described above purely by way of example. Modifications in detail may be made to the invention within the scope of the claims.

## Claims

1. An electrochemical cell unit (401) comprising:
a cell layer (405) comprising an electrochemically active cell region (307); and,
a separator plate (410) comprising a metal sheet overlying the cell layer;
wherein the separator plate has a selectively shaped three dimensional (3D) region that overlies at least part of the electrochemically active cell region;
and in that three dimensional (3D) region:
the metal sheet has been deformed into a first plurality of outwardly extending dimpled protrusions (430, 433) that define the height of a first fluid volume on a first side of the separator plate;
additionally, the metal sheet has been deformed into a second plurality of outwardly extending dimpled protrusions (435, 438) that define the height of a second fluid volume on a second side of the separator plate;
whereby a mid-plane region (443) is disposed between the protrusions; and,
the mid-plane region is so shaped as selectively to vary its height in at least one direction across the active cell region such that the interrelated respective heights of the first and second fluid volumes are correspondingly increased and decreased as a result.

2. The electrochemical cell unit claim 1, comprising an inlet (316, 716, 816) to and an outlet (316, 717, 817) from the first fluid volume positioned towards opposing edges of the cell unit with the electrochemically active cell region positioned therebetween, and wherein the at least one direction of height variation in the mid-plane region is such that the height of the first fluid volume is smaller in a central area of the cell unit than in an area adjacent to an edge of the cell unit.

3. The electrochemical cell unit of claim 1 or 2, wherein the at least one direction of height variation in the mid-plane region is generally perpendicular to a straight line between an inlet to and an outlet from the first fluid volume, and wherein the height of the first fluid volume is smaller along the straight line than to at least one side of the straight line.

4. The electrochemical cell unit of claim 1, comprising an inlet (316, 716, 816) to and an outlet (316, 717, 817) from the first fluid volume positioned towards opposing edges of the cell unit with the electrochemically active cell region positioned therebetween, and wherein the at least one direction of height variation in the mid-plane region is such that the height of the first fluid volume decreases from the inlet to the outlet of the first fluid volume.

5. The electrochemical cell unit of claim 4, comprising an inlet (316, 716, 816) to and an outlet (316, 717, 817) from the second fluid volume positioned towards or outwith opposing edges of the cell unit with the electrochemically active cell region positioned therebetween, the inlet and outlet of the second fluid volume positioned such that the height of the second fluid volume increases from the inlet to the outlet of the second fluid volume.

6. The electrochemical cell unit of claim 5, wherein the second fluid volume includes a bypass for second fluid around a portion of the 3D region proximal to the inlet to the second fluid volume.

7. The electrochemical cell unit of any preceding claim, wherein the 3 dimensional (3D) region overlies all of the electrochemically active cell region (307).

8. The electrochemical cell unit of any preceding claim, whereby the dimpled protrusions of the first and second plurality of dimpled protrusions are shaped such that their outermost portions do not comprise any laterally extending contact portions that extend heightwise the full height of a fluid volume so as to form a channel within that fluid volume within which flow is constrained.

9. The electrochemical cell unit of any preceding claim, wherein the first side of the separator plate (410) faces the cell layer (405) and a contact portion of each of the first plurality of dimpled protrusions contact the cell layer.

10. The electrochemical cell unit of claim 9, wherein the contact portion of each of the first plurality of dimples and a contact portion of each of the second plurality of dimples respectively form first and second planes, the first and second planes each being planar and parallel to one another.

11. The electrochemical cell unit of any preceding claim, wherein the cell unit is a metal-supported cell unit such that the cell layer (405) comprises a metal support plate carrying, on a first side thereof, the electrochemically active cell region (307) provided over a porous region.

12. The electrochemical cell unit of any preceding claim, wherein the first fluid volume is for fuel, and the second fluid volume is for oxidant.

13. An electrochemical cell stack (400) comprising a plurality of electrochemical cell units (401) according to any one of the preceding claims, wherein:
the first side of the separator plate (410) of a first electrochemical cell unit (401a) faces the cell layer (405) of the first electrochemical cell unit and encloses the first fluid volume therebetween, and
the second side of the separator plate (410) of the first electrochemical cell unit (401a) faces a cell layer of a second, neighbouring, electrochemical cell unit (401b) in the stack of cell units and encloses the second fluid volume therebetween.

14. The electrochemical cell stack of claim 13, further comprising means for supply and exhaust of first fluid from the first fluid volume, wherein the means for supply and exhaust of first fluid from the first fluid volume comprises at least one fluid port (316, 716, 816) provided through the separator plate and the cell layer which is in fluid communication with the first fluid volume, wherein the at least one fluid port of the respective cell units align to form at least one passageway extending in the stack direction, these being internally manifolded passageways.

15. A method for manufacturing a separator plate, comprising
providing a planar metal sheet; and
deforming the metal sheet to provide a three dimensional (3D) region, the three dimensional (3D) region comprising:
a first plurality of outwardly extending dimpled protrusions that define the height of a first fluid volume on a first side of the separator plate;
a second plurality of outwardly extending dimpled protrusions that define the height of a second fluid volume on a second side of the separator plate;
whereby a mid-plane region is disposed between the protrusions; and,
the mid-plane region is so shaped as selectively to vary its height in at least one direction across the active cell region such that the interrelated respective heights of the first and second fluid volumes are correspondingly increased and decreased as a result.

## Patentansprüche

1. Elektrochemische Zelleneinheit (401), umfassend:
eine Zellenschicht (405), die einen elektrochemisch aktiven Zellenbereich (307) umfasst; und eine Separatorplatte (410), die ein Metallblech umfasst, das die Zellenschicht überlagert;
wobei die Separatorplatte einen selektiv geformten dreidimensionalen (3D) Bereich aufweist, der zumindest einen Teil des elektrochemisch aktiven Zellenbereichs überlagert;
und in diesem dreidimensionalen (3D) Bereich:
das Metallblech zu einer ersten Mehrzahl von sich nach außen erstreckenden, noppenartigen Vorsprüngen (430, 433) verformt wurde, die die Höhe eines ersten Flüssigkeitsvolumens auf einer ersten Seite der Separatorplatte definieren;
das Metallblech außerdem zu einer zweiten Mehrzahl von sich nach außen erstreckenden, noppenartigen Vorsprüngen (435, 438) verformt wurde, die die Höhe eines zweiten Fluidvolumens auf einer zweiten Seite der Separatorplatte definieren;
wodurch ein Mittelebenenbereich (443) zwischen den Vorsprüngen angeordnet wird; und
der Mittelebenenbereich so geformt ist, dass seine Höhe in mindestens einer Richtung über den aktiven Zellenbereich hinweg selektiv so variiert, dass die miteinander in Beziehung stehenden jeweiligen Höhen des ersten und zweiten Fluidvolumens infolgedessen entsprechend vergrößert bzw. verringert werden.

2. Elektrochemische Zelleneinheit nach Anspruch 1, die einen Einlass (316, 716, 816) zu dem und einen Auslass (316, 717, 817) aus dem ersten Fluidvolumen, die in Richtung gegenüberliegender Ränder der Zelleneinheit positioniert sind, umfasst, wobei der elektrochemisch aktive Zellenbereich dazwischen positioniert ist, und wobei die mindestens eine Richtung der Höhenänderung im Mittelebenenbereich derart ist, dass die Höhe des ersten Fluidvolumens in einem zentralen Bereich der Zelleneinheit geringer ist als in einem Bereich, der an einen Rand der Zelleneinheit angrenzt.

3. Elektrochemische Zelleneinheit nach Anspruch 1 oder 2, wobei die mindestens eine Richtung der Höhenänderung im Mittelebenenbereich im Allgemeinen senkrecht zu einer Geraden zwischen einem Einlass zu dem und einem Auslass aus dem ersten Fluidvolumen verläuft, und wobei die Höhe des ersten Fluidvolumens entlang der Geraden geringer ist als zu mindestens einer Seite der Geraden.

4. Elektrochemische Zelleneinheit nach Anspruch 1, die einen Einlass (316, 716, 816) zu dem und einen Auslass (316, 717, 817) aus dem ersten Fluidvolumen, die in Richtung gegenüberliegender Rändern der Zelleneinheit positioniert sind, umfasst, wobei der elektrochemisch aktive Zellenbereich dazwischen angeordnet ist, und wobei die mindestens eine Richtung der Höhenänderung im Mittelebenenbereich derart ist, dass die Höhe des ersten Fluidvolumens vom Einlass zum Auslass des ersten Fluidvolumens abnimmt.

5. Elektrochemische Zelleneinheit nach Anspruch 4, die einen Einlass (316, 716, 816) zu dem und einen Auslass (316, 717, 817) aus dem zweiten Fluidvolumen, die in Richtung oder außerhalb gegenüberliegender Ränder der Zelleneinheit positioniert sind, umfasst, wobei der elektrochemisch aktive Zellenbereich dazwischen positioniert ist, wobei der Einlass und der Auslass des zweiten Fluidvolumens so positioniert sind, dass die Höhe des zweiten Fluidvolumens vom Einlass zum Auslass des zweiten Fluidvolumens zunimmt.

6. Elektrochemische Zelleneinheit nach Anspruch 5, wobei das zweite Fluidvolumen einen Bypass für zweites Fluid um einen Abschnitt des 3D-Bereichs herum umfasst, der dem Einlass zum zweiten Fluidvolumen naheliegt.

7. Elektrochemische Zelleneinheit nach einem der vorhergehenden Ansprüche, wobei der dreidimensionale (3D) Bereich den gesamten elektrochemisch aktiven Zellenbereich (307) überlagert.

8. Elektrochemische Zelleneinheit nach einem der vorhergehenden Ansprüche, wobei die noppenartigen Vorsprünge der ersten und zweiten Mehrzahl von noppenartigen Vorsprüngen so geformt sind, dass ihre äußersten Abschnitte keine sich seitlich erstreckenden Kontaktabschnitte umfassen, die sich höhenmäßig über die gesamte Höhe eines Fluidvolumens erstrecken, um innerhalb dieses Fluidvolumens einen Kanal zu bilden, in dem der Fluss eingeschränkt ist.

9. Elektrochemische Zelleneinheit nach einem der vorhergehenden Ansprüche, wobei die erste Seite der Separatorplatte (410) der Zellenschicht (405) zugewandt ist und ein Kontaktabschnitt jedes der ersten Mehrzahl von noppenartigen Vorsprüngen mit der Zellenschicht in Kontakt kommt.

10. Elektrochemische Zelleneinheit nach Anspruch 9, wobei der Kontaktabschnitt jedes der ersten Mehrzahl von Noppen und ein Kontaktabschnitt jeder der zweiten Mehrzahl von Noppen jeweils eine erste und eine zweite Ebene bilden, wobei die erste und die zweite Ebene jeweils eben und zueinander parallel sind.

11. Elektrochemische Zelleneinheit nach einem der vorhergehenden Ansprüche, wobei die Zelleneinheit eine metallgestützte Zelleneinheit ist, derart, dass die Zellenschicht (405) eine Metallträgerplatte umfasst, die auf einer ersten Seite davon den elektrochemisch aktiven Zellenbereich (307) trägt, der über einem porösen Bereich vorgesehen ist.

12. Elektrochemische Zelleneinheit nach einem der vorhergehenden Ansprüche, wobei das erste Fluidvolumen für Brennstoff und das zweite Fluidvolumen für Oxidationsmittel vorgesehen ist.

13. Elektrochemischer Zellenstapel (400), der eine Mehrzahl von elektrochemischen Zelleinheiten (401) nach einem der vorhergehenden Ansprüche umfasst, wobei:
die erste Seite der Separatorplatte (410) einer ersten elektrochemischen Zelleneinheit (401a) der Zellenschicht (405) der ersten elektrochemischen Zelleneinheit zugewandt ist und das erste Fluidvolumen dazwischen einschließt, und
die zweite Seite der Separatorplatte (410) der ersten elektrochemischen Zelleneinheit (401a) einer Zellenschicht einer zweiten, benachbarten elektrochemischen Zelleneinheit (401b) im Stapel von Zelleneinheiten zugewandt ist und das zweite Fluidvolumen dazwischen einschließt.

14. Elektrochemischer Zellenstapel nach Anspruch 13, der ferner ein Mittel zur Zufuhr und Ableitung eines ersten Fluids aus dem ersten Fluidvolumen umfasst, wobei das Mittel zur Zufuhr und Ableitung des ersten Fluids aus dem ersten Fluidvolumen mindestens einen Fluidanschluss (316, 716, 816) umfasst, der durch die Separatorplatte und die Zellenschicht hindurch vorgesehen ist und in Fluidverbindung mit dem ersten Fluidvolumen steht, wobei der mindestens eine Fluidanschluss der jeweiligen Zelleneinheiten so ausgerichtet ist, dass er mindestens einen sich in Stapelrichtung erstreckenden Durchgang bildet, wobei es sich um intern verzweigte Durchgänge handelt.

15. Verfahren zum Herstellen einer Separatorplatte, umfassend:
Bereitstellen eines ebenen Metallblechs; und
Verformen des Metallblechs, um einen dreidimensionalen (3D) Bereich bereitzustellen, wobei der dreidimensionale (3D) Bereich umfasst:
eine erste Mehrzahl von sich nach außen erstreckenden noppenartigen Vorsprüngen, die die Höhe eines ersten Fluidvolumens auf einer ersten Seite der Separatorplatte definieren;
eine zweite Mehrzahl von sich nach außen erstreckenden noppenartigen Vorsprüngen, die die Höhe eines zweiten Fluidvolumens auf einer zweiten Seite der Separatorplatte definieren;
wodurch ein Mittelebenenbereich zwischen den Vorsprüngen angeordnet wird; und der Mittelebenenbereich so geformt ist, dass seine Höhe in mindestens einer Richtung über den aktiven Zellenbereich hinweg selektiv so variiert, dass die miteinander in Beziehung stehenden jeweiligen Höhen des ersten und zweiten Fluidvolumens infolgedessen entsprechend vergrößert bzw. verkleinert werden.

## Revendications

1. Unité de cellule électrochimique (401) comprenant :
une couche de cellule (405) présentant une région de cellule électrochimiquement active (307) ; et
une plaque séparatrice (410) comprenant une plaque métallique recouvrant la couche de cellule ;
dans laquelle la plaque séparatrice présente une région tridimensionnelle (3D) de forme sélective qui recouvre au moins une partie de la région de la cellule électrochimiquement active ;
et dans cette région tridimensionnelle (3D) :
la tôle métallique a été déformée en une première pluralité de saillies alvéolées s'étendant vers l'extérieur (430, 433) qui définissent la hauteur d'un premier volume de fluide sur une première face de la plaque séparatrice ;
de plus, la tôle métallique a été déformée en une seconde pluralité de saillies alvéolées s'étendant vers l'extérieur (435, 438) qui définissent la hauteur d'un second volume de fluide sur une seconde face de la plaque séparatrice ;
une région de plan médian (443) étant ainsi disposée entre les saillies ; et
la région de plan médian présente une forme sélective de manière à faire varier sa hauteur dans au moins une direction dans la région de cellule active, de sorte que les hauteurs respectives interdépendantes des premier et second volumes de fluide augmentent et diminuent de manière correspondante en conséquence.

2. Unité de cellule électrochimique selon la revendication 1, comprenant une entrée (316, 716, 816) et une sortie (316, 717, 817) du premier volume de fluide positionnées vers des bords opposés de l'unité de cellule, la région électrochimiquement active étant positionnée entre celles-ci, et dans laquelle ladite au moins une direction de variation de hauteur dans la région de plan médian est telle que la hauteur du premier volume de fluide est inférieure dans une zone centrale de l'unité de cellule que dans une zone adjacente à un bord de l'unité de cellule.

3. Unité de cellule électrochimique selon la revendication 1 ou 2, dans laquelle ladite au moins une direction de variation de hauteur dans la région de plan médian est généralement perpendiculaire à une ligne droite entre une entrée et une sortie du premier volume de fluide, et dans laquelle la hauteur du premier volume de fluide est plus petite le long de la ligne droite que sur au moins un côté de la ligne droite.

4. Unité de cellule électrochimique selon la revendication 1, comprenant une entrée (316, 716, 816) et une sortie (316, 717, 817) du premier volume de fluide positionnées vers des bords opposés de l'unité de cellule, la région électrochimiquement active étant positionnée entre celles-ci, et dans laquelle ladite au moins une direction de variation de hauteur dans la région de plan médian est telle que la hauteur du premier volume de fluide diminue de l'entrée vers la sortie du premier volume de fluide.

5. Unité de cellule électrochimique selon la revendication 4, comprenant une entrée (316, 716, 816) et une sortie (316, 717, 817) du second volume de fluide positionnées vers ou au-delà des bords opposés de l'unité de cellule, la région électrochimiquement active de la cellule étant positionnée entre celles-ci, l'entrée et la sortie du second volume de fluide étant positionnées de sorte que la hauteur du second volume de fluide augmente de l'entrée vers la sortie du second volume de fluide.

6. Unité de cellule électrochimique selon la revendication 5, dans laquelle le second volume de fluide comprend une dérivation pour un second fluide contournant une partie de la région 3D proche de l'entrée du second volume de fluide.

7. Unité de cellule électrochimique selon l'une quelconque des revendications précédentes, dans laquelle la région tridimensionnelle (3D) recouvre toute la région de cellule électrochimiquement active (307).

8. Unité de cellule électrochimique selon l'une quelconque des revendications précédentes, dans laquelle les saillies alvéolées des première et seconde pluralités de saillies alvéolées présentent une forme telle que leurs parties les plus externes ne comprennent aucune partie de contact s'étendant latéralement qui s'étendent en hauteur sur toute la hauteur d'un volume de fluide afin de former un canal à l'intérieur dudit volume de fluide dans lequel l'écoulement est contraint.

9. Unité de cellule électrochimique selon l'une quelconque des revendications précédentes, dans laquelle la première face de la plaque séparatrice (410) fait face à la couche de cellule (405) et une partie de contact de chaque saillie alvéolée de la première pluralité de saillies alvéolées entre en contact avec la couche de cellule.

10. Unité de cellule électrochimique selon la revendication 9, dans laquelle la partie de contact de chaque alvéole de la première pluralité d'alvéoles et une partie de contact de chaque alvéole de la seconde pluralité d'alvéoles forment respectivement les premier et second plans, lesdits premier et second plans étant chacun planaires et parallèles l'un à l'autre.

11. Unité de cellule électrochimique selon l'une quelconque des revendications précédentes, laquelle l'unité de cellule est une unité de cellule à support métallique telle que la couche de cellule (405) comprend une plaque de support métallique portant, sur une première face de celle-ci, la région de cellule électrochimiquement active (307) disposée au-dessus d'une région poreuse.

12. Unité de cellule électrochimique selon l'une quelconque des revendications précédentes, dans laquelle le premier volume de fluide est destiné au carburant et le second volume de fluide est destiné à l'oxydant.

13. Empilement de cellules électrochimiques (400) comprenant une pluralité d'unités de cellules électrochimiques (401) selon l'une quelconque des revendications précédentes, dans lequel :
la première face de la plaque séparatrice (410) d'une première unité de cellule électrochimique (401a) fait face à la couche de cellule (405) de la première unité de cellule électrochimique et renferme, entre elles, le premier volume de fluide, et
la seconde face de la plaque séparatrice (410) de la première unité de cellule électrochimique (401a) fait face à une couche de cellule d'une seconde unité de cellule électrochimique voisine (401b) dans l'empilement des unités de cellule et renferme, entre elles, le second volume de fluide.

14. Empilement de cellules électrochimiques selon la revendication 13, comprenant en outre des moyens d'alimentation et d'évacuation du premier fluide à partir du premier volume de fluide, lesdits moyens d'alimentation et d'évacuation du premier fluide à partir du premier volume de fluide comprenant au moins un orifice de fluide (316, 716, 816) ménagé dans la plaque séparatrice et la couche de cellule qui est en communication fluidique avec le premier volume de fluide, ledit au moins un orifice de fluide des unités de cellule respectives s'alignant pour former au moins un passage s'étendant dans la direction de l'empilement, lesdits passages étant des passages à collecteurs internes.

15. Procédé de fabrication d'une plaque séparatrice, comprenant
la fourniture d'une tôle métallique plane ; et
la déformation de la tôle métallique de manière à réaliser une région tridimensionnelle (3D), ladite région tridimensionnelle (3D) comprenant :
une première pluralité de saillies alvéolées s'étendant vers l'extérieur qui définissent la hauteur d'un premier volume de fluide sur une première face de la plaque séparatrice ;
une seconde pluralité de saillies alvéolées s'étendant vers l'extérieur qui définissent la hauteur d'un second volume de fluide sur une seconde face de la plaque séparatrice ;
une région de plan médian étant ainsi disposée entre les saillies ; et,
ladite région de plan médian présentant une forme sélective de manière à faire varier sa hauteur dans au moins une direction dans la région de cellule active, de sorte que les hauteurs respectives interdépendantes des premier et second volumes de fluide augmentent et diminuent de manière correspondante en conséquence.
